# EUROPEAN PATENT SPECIFICATION

(11) **EP 0 809 346 B1**
(45) Date of publication and mention of the grant of the patent: **29.08.2001**
(21) Application number: 97104195.9
(22) Date of filing: 12.03.1997
(51) Int. Cl.: H02M 1/12, H02H 3/14

(54) **Inverter apparatus for supplying a brushless DC motor with drive power**
Wechselrichter zur Versorgung eines bürstenlosen Gleichstrommotors mit Leistung
Onduleur d'alimentation de moteur à courant continu sans balai

(30) Priority: 21.05.1996 JP 12575296; 13.02.1997 JP 2894597
(43) Date of publication of application: 26.11.1997
(73) Proprietor: KABUSHIKI KAISHA TOSHIBA, Kawasaki-shi, Kanagawa 212-8572 (JP)
(72) Inventor: Kamimura, Toshiyuki, 1-1 Shibaura 1-chome,Minato-ku Tokyo 105 (JP); Sano, Tetuo, 1-1 Shibaura 1-chome,Minato-ku Tokyo 105 (JP); Tanaka, Hiroyuki, 1-1 Shibaura 1-chome,Minato-ku Tokyo 105 (JP); Motohashi, Hideaki, 1-1 Shibaura 1-chome,Minato-ku Tokyo 105 (JP)
(74) Representative: Henkel, Feiler, Hänzel

(56) References cited:
- EP-A- 0 780 960
- US-A- 4 833 377
- PATENT ABSTRACTS OF JAPAN vol. 012, no. 328 (E-654), 6 September 1988 & JP 63 092272 A (TOSHIBA CORP), 22 April 1988,
- PATENT ABSTRACTS OF JAPAN vol. 014, no. 038 (E-878), 24 January 1990 & JP 01 270795 A (MITSUBISHI ELECTRIC CORP), 30 October 1989,
- PATENT ABSTRACTS OF JAPAN vol. 096, no. 004, 30 April 1996 & JP 07 322686 A (TOSHIBA CORP), 8 December 1995,

## Description

This invention related to an inverter apparatus to be mounted on a refrigerating apparatus comprising a compressor.

Air conditioners, refrigerators and freezers are provided with a compressor and an inverter apparatus for driving the motor of the compressor.

An inverter apparatus comprises a DC circuit for transforming a commercial AC supply voltage into a DC voltage and a switching circuit for transforming the output voltage of the DC circuit into a high frequency voltage by its switching operations. The output of the switching circuit is then fed to the motor of the compressor as drive power.

The compressor is housed in a closed case, which also contains said motor. The closed case is entirely made of iron and grounded for safety precautions.

The motor is typically a brushless DC motor having three phase windings. An electrostatic capacitance (so-called stray capacitance) exists between each of the phase windings of the brushless DC motor and the closed case (or the ground) so that a high frequency leak current of an order of several MHz flows from the phase windings to the ground via said electrostatic capacitance as the switching circuit of the inverter apparatus is driven for switching operations.

The high frequency leak current is dielectrically fed to the commercial AC supply voltage and can adversely affect the controllability of the operation of driving the inverter apparatus and give rise to a failure on the part of some of the nearby electric appliances and breakers.

The measures currently taken for reducing the high frequency leak current include the use of a choke coil arranged on the conduction lines between the output terminal and the compressor motor and a reduced switching frequency of the inverter apparatus.

However, a choke coil cannot satisfactorily reduce the high frequency leak current when the switching frequency of the inverter apparatus is high.

A reduced switching frequency of the inverter apparatus interferes with any efforts for improving the capacity of the compressor and can result in an insufficient freezing capacity on the part of refrigerator.

US-A-4 833 377 discloses a circuit creating an offset current which is 180° out of phase with the leakage current for a motorized bed circuit. The offset current is created through the use of an additional transformer winding and series resistor which is connected between the neutral conductor and ground conductor.

Prior art document JP 63 09 22 72 discloses an inverter apparatus wherein DC power is set at a variable voltage and variable frequency by an inverter main circuit equipped with feedback diodes and supplied to a load three-phase induction motor via respective reactor windings. In this apparatus, one end of each of three series circuits each consisting of resistance and capacitor are connected in common to each other and a common junction of said circuits is connected to a bus of the inverter main circuit via a fourth reactor winding. Thus, a high frequency current due to switching is caused to flow from the series circuits each of resistance and capacitor and the reactor winding to the bus of the main circuit so that said current can be restrained from flowing to a load side.

On the other hand, CFCs and HCFCs are used popularly as refrigerants for the refrigerating cycle of air conditioning apparatus, HCFC-22 (CHClF2) being most popular among these refrigerants.

The closed case of the compressor is filled with lubricant oil, which is typically mineral oil that is compatible with the refrigerant when any of the CFCs and HCFCs are used. Thus, as the refrigerant is discharged from the closed case of the compressor, the lubricant oil is also partly discharged with the refrigerant. Since the discharged lubricant oil is compatible with the refrigerant, it is dissolved into the refrigerant in the piping provided for the refrigerating cycle to reduce the viscosity of the latter. Consequently, the lubricant oil is made to flow easily through the piping and return to the compressor.

Now, CFCs and HCFCs are highly destructive to the ozone layer and the use of HFCs (hydrofluorocarbons) having a zero destructing effect on the ozone layer has been studied as replacements for CFCs and HCFCs.

HFCs that can be used as refrigerants include HFC-32 (CH₂F₂), HFC-125 (CHF₂CF₃), HFC-134a and HFC-143a that are used independently as single refrigerants. Refrigerants such as R-410A, R-407A, R-407B, R-407C and R-404A that are HFC mixtures may also be used.

Unfortunately, HFCs are not compatible with mineral oil type lubricant oils.

Ester type and ether type lubricant oils are compatible with HFCs. The compatibility derives from the fact that the molecules of an HFC type refrigerant show polarity like those of ester type and ether type lubricant oils.

However, refrigerants and lubricant oils whose molecules show polarity have a large dielectric constant and hence, there arises a problem that the high frequency leak current of the compressor will show a high intensity when such refrigerant and lubricant oil exist within the compressor.

In view of the above circumstances, it is therefore the object of the present invention to provide an inverter apparatus that can reliably reduce the high frequency leak current to improve the refrigerating capacity of the compressor to a satisfactory level if an HFC type refrigerant is used.

The inverter apparatus according to the invention, for outputting drive power to a brushless DC motor having three phase windings and housed in a closed case of a compressor to which the inverter apparatus belongs, the closed case being connected to an earthing terminal, comprises:
a DC circuit for transforming an AC supply voltage to a DC voltage;
a switching circuit for transforming the output voltage of the DC circuit to a high frequency voltage by switching operations and outputting the high frequency voltage as the drive power; and
an offsetting means for offsetting the leak current flowing from the phase windings of the brushless DC motor to the earthing terminal E by way of the closed case.

The above object is achieved by such an inverter apparatus having the characterizing features of claims 1 to 3, 5, 6, 8 and 9.

This invention can be more fully understood from the following detailed description when taken in conjunction with the accompanying drawings, in which:
FIG. 1 is a block diagram of an air conditioning apparatus showing the refrigerating cycle of the operation thereof that can be used for the purpose of the present invention.
FIG. 2 is a schematic cross sectional view of a compressor that can be used for the purpose of the invention.
FIG. 3 is a block diagram of the control circuit of the first embodiment of the invention.
FIG. 4 is a graph showing the waveform of the high frequency leak current I₁ of each of the preferred embodiments.
FIG. 5 is a graph showing the waveform of the offsetting current I₂ of each of the first through fourth embodiments.
FIG. 6 is a graph showing the waveform of the electric current I₃ made to flow to the ground by the offsetting effect of each of the preferred embodiments.
FIG. 7 is a block diagram of the control circuit of the second embodiment.
FIG. 8 is a block diagram of the control circuit of the third embodiment.
FIG. 9 is a block diagram of the control circuit of the fourth embodiment.
FIG. 10 is a block diagram of the control circuit of the fifth embodiment.
FIG. 11 is a block diagram of the control circuit of the sixth embodiment.
FIG. 12 is a block diagram of the control circuit of the seventh embodiment.
FIG. 13 is a block diagram of the control circuit of the eighth embodiment.
FIG. 14 is a block diagram of the control circuit of the ninth embodiment.

### [1] Now, the first preferred embodiment of the invention will be described below.

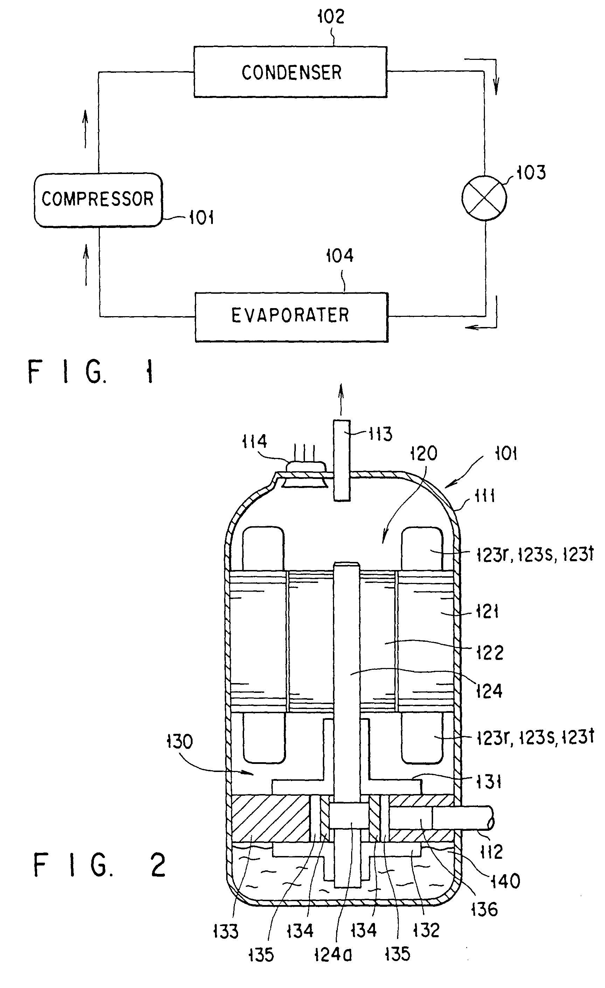

FIG. 1 is a block diagram of an air conditioning apparatus showing the refrigerating cycle of the operation thereof that can be used for the purpose of the present invention.

Referring to FIG. 1, there are arranged a compressor 101, a condenser 102, a pressure reducer (e.g., an extension valve or a capillary tube) 103, an evaporator 104 connected by piping to establish a closed loop for the refrigerating cycle of the air conditioning apparatus. The closed loop of the refrigerating cycle contains therein an HFC (hydrofluorocarbon) type refrigerant that may be a mixture of HFC-32 and HFC-125 (containing both HFC-32 and HFC-125 at 50 wt%).

The refrigerant to be sealed in the closed loop may be HFC-32 (CH₂F₂), HFC-125 (CHF₂CF₃), HFC-134a or HFC-143a that is used independently or a mixture of any of them such as R-410A, R-407A, R-407B, R-407C or R-404A.

As shown in FIG. 2, the compressor 101 is housed in a closed case 111. The closed case 111 is provided with a suction pipe 112 fitted to a lower area thereof and a discharge pipe 113 and a terminal 114 fitted to an upper area thereof.

The closed case 111 contains therein a motor 120 and a compressor section 130 to be driven by the motor 120.

The motor 120 is a brushless DC motor comprising a stator 121 and a rotor 122. The stator 121 is provided with three phase windings 123r, 123s and 123t. The rotor 122 is realized by axially arranging a number of disc-shaped steel plates to form a multilayer structure with a shaft 124 running through the structure to operate as a core and four permanent magnets surrounding the shaft 124.

The phase windings 123r, 123s and 123t of the stator 121 sequentially generates respective magnetic fields as they are sequentially energized in a switched manner (commutation) and the magnetic fields interact with the magnetic fields generated by the respective permanent magnets of the rotor 122 to generate a torque in the rotor 122.

The compressor 130 has a main bearing 131 and a sub-bearing 132 for holding the shaft 124 that also runs through the compressor 130 in position and a cylinder 133 disposed between the bearings 131 and 132. The cylinder 133 contains therein an eccentric section 124a of the shaft 124. A roller 134 is arranged around the outer periphery of the eccentric section 124a and a compression chamber 135 is formed around the roller. The compression chamber 135 is held in communication with a suction port 136, which by turn communicates with the suction pipe 112. The cylinder 133 is provided with a discharge port (not shown) at a position corresponding to the compression chamber 135.

As the motor 120 is driven to rotate the rotor 122 and the shaft 124, the rotor 134 of the compressor section 130 is rotated eccentrically to give rise to suction pressure (negative pressure) in the compression chamber 135. Then, refrigerant is sucked from the suction pipe 112 into the compression chamber 135 under suction pressure and then compressed in the compression chamber 135 before it is discharged into the closed case 111 through the discharge port. The refrigerant discharged into the closed case 111 is then fed to the above described refrigerating cycle by way of the discharge pipe 113.

The closed case 111 contains lubricant oil 140 on the inner bottom thereof, which lubricant oil 140 lubricates and cools the mechanism of the compressor section 130.

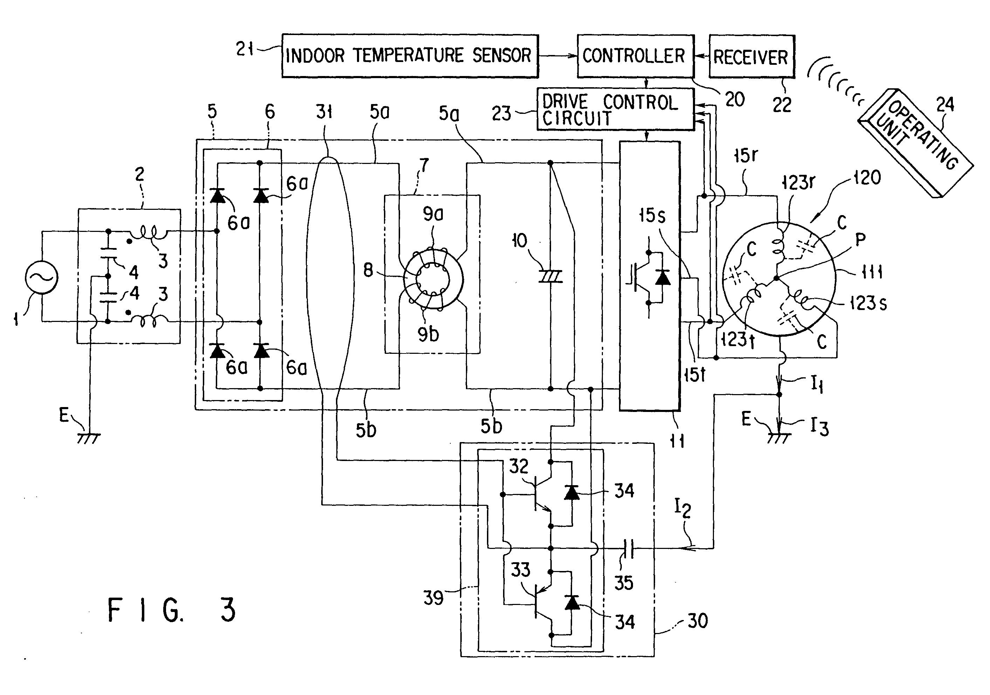

There is also provided an inverter apparatus as shown in FIG. 3 for feeding the motor with drive power.

A DC circuit 5 is connected to commercial AC power supply 1 by way of a low-pass filter (which is also referred to as a line filter) for removing noises.

The low-pass filter 2 comprises a pair of choke coils 3, 3 and a pair of capacitors 4, 4 and blocks the transmission of high frequency noise from the DC circuit 5 to the power supply 1.

The DC circuit 5 comprises a rectifying circuit 6 realized through bridge connection of four diodes 6a, a low-pass filter 7 arranged downstream relative to the rectifying circuit 6 for removing noises and a smoothing capacitor 10 connected downstream relative to the low-pass filter 7 and transforms the AC voltage of the commercial AC power supply 1 to a DC voltage.

The low-pass filter 7 comprises a ferrite core 8 and a pair of coils 9a, 9b wound around the ferrite core 8. The coils 9a, 9b are made of respective copper wires that are arranged to realize synchronous windings and inserted into respective output lines 5a, 5b. If there is a noise source located on the load side of the closed loop relative to the low-pass filter 7, a noise current from the noise source flows through one of the coils, or the coil 9a, and the magnetic field generated by the noise current and the magnetic field generated by the noise current and flowing back through the other coil 9b offset each other to block any high frequency noise that can affect the operation of the refrigerating apparatus.

A switching circuit 11 is connected to the output terminal of the DC circuit 5. The switching circuit 11 comprises a plurality of switching devices such as power transistors and transforms the DC voltage fed from the DC circuit 5 to a three-phase high frequency voltage through switching operations of the power transistors.

The output voltage of the switching circuit 11 is fed to the phase windings 123r, 123s and 123t of the motor 120 via respective conduction lines 15r, 15s, 15t.

The closed case 111 containing the motor 120 is grounded by way of an earthing terminal E for safety precautions. The phase windings 123r, 123s and 123t are connected to a common point P for star connection.

An electrostatic capacitance (so-called stray capacitance) between each of the phase windings 123r, 123s and 123t and the closed case 111 (or the earthing terminal E). Thus, as the motor 120 is driven, a common mode voltage is generated between the common point P of the phase windings 123r, 123s and 123t and the earthing terminal E by way of the respective electrostatic capacitances C. Then, as a common mode voltage is generated, a common mode current flows from the phase windings 123r, 123s and 123t to the earthing terminal E via the respective electrostatic capacitances C. The common mode current is referred to as high frequency leak current I₁.

According to the invention, a current offset circuit 30 and a current detector 31 are arranged for the above circuit configuration.

The current detector 31 detects a common mode current (a high frequency leak current I₁) and arranged onto the output line 5a extending between the rectifying circuit 6 and the low-pass filter 7.

The current offset circuit 30 comprises an amplifier circuit 39 having an NPN-type transistor 32 and a PNP-type transistor 33 and operating as a class A push-pull for the output voltage of the current detector 31, diodes 34 respectively connected between the correctors and the emitters of the corresponding transistors 32, 33 for the prevention of counter-electromotive force and a capacitor for removing any DC fraction. It generates an electric current I₂ having a waveform similar to that of the common mode current detected by the current detector 31 by means of said amplifier circuit 39 in order to offset the leak current and outputs the electric current I₂ by way of said capacitor 35. The output terminal of the current offset circuit 30 is connected to the earthing terminal E.

The air conditioning apparatus has a controller 20 for controlling the overall operation of the air conditioning apparatus. The controller 20 is connected to an indoor temperature sensor 21, a receiver 22 and a drive control circuit 23

The indoor temperature sensor 21 detects the temperature Ta within the room served by the air conditioning apparatus. The receiver 22 receives the infrared rays transmitted from a remotely controlled operating unit 24. An operating unit 24 transmits data necessary for setting the conditions necessary for operating the air conditioning apparatus by way of infrared rays.

The drive control circuit 23 turns on and off each of the power transistors of the switching circuit 11 according to the command from the controller 20 and controls the switching frequency of the switching circuit 11, or the frequency with which the power transistors are turned on and off. It also controls the on-duty period (and the off-duty period) of the power transistors (PWM control).

The above described arrangement operates in a manner as described below.

The user selects a desired room temperature Ts by means of the operating unit 24 and starts the operation of the arrangement. Then, the switching circuit 11 is driven for switching operations and the motor 120 is driven by the output of the switching circuit 11.

Under this condition, the difference ΔT between the room temperature detected by the indoor temperature sensor 21 and the selected room temperature Ts is determined and the drive control circuit 23 controls the switching frequency of the switching circuit 11 according to the determined temperature difference ΔT.

If the switching frequency of the switching circuit 11 is altered, the number of revolutions per unit time of the motor 120 is modified accordingly. The change in the number of revolutions per unit time results in a change in the capacity of the compressor 101.

When the time difference ΔT is reduced to nil, the switching operation of the switching circuit 11 is suspended to stop the motor 120 and the operation of the compressor 101 is also suspended.

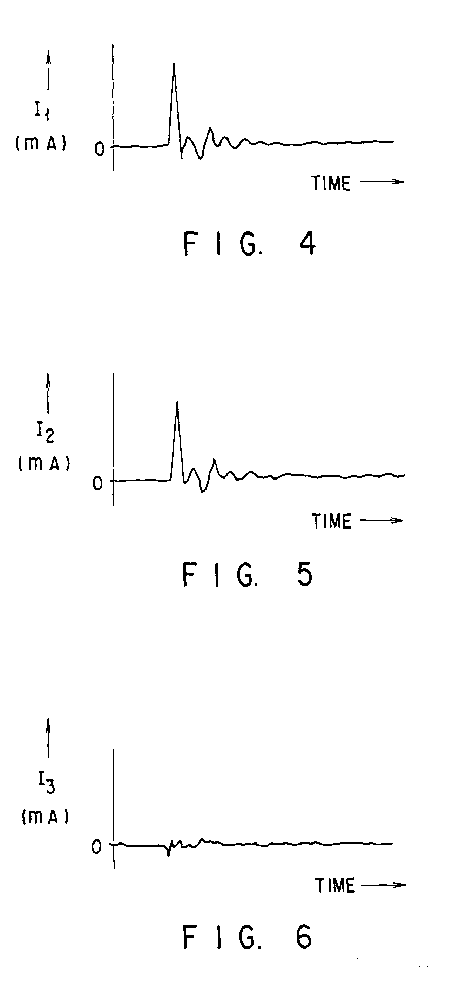

A common mode voltage is produced between the common point P of the phase windings 123r, 123s and 123t of the motor 120 and the earthing terminal E by way of the respective electrostatic capacitances C. Then, as shown in FIG. 4, a common mode current that is a high frequency leak current I₁ having a frequency of several MHz flows from the phase windings 123r, 123s and 123t to the earthing terminal E by way of the respective electrostatic capacitances C.

The high frequency leak current I₁ is dielectrically transmitted to the commercial AC power supply 1 to adversely affect the controllability of the operation of driving the inverter apparatus and give rise to a failure on the part of some of the nearby electric appliances and breakers.

The high frequency leak current I₁ dielectrically transmitted to the commercial AC power supply 1 then flows into the DC circuit 5. As a result, the current detector 31 detects an electric current having an intensity proportional to that of the common mode current. The output voltage of the current detector 31 representing the detected common mode current is then subjected to class A push-pull amplification by the amplifier circuit 39 having the transistors 32 and 33. As a result of the amplification, an offsetting current I₂ having a waveform resembling that of the common mode current as shown in FIG. 5 is generated.

The offsetting current I₂ has a polarity directed from the earthing terminal E to the current offset circuit 30 and the high frequency leak current I₁ is offset by the offsetting current I₂ to appear as if it is absorbed by the current offset circuit 30 because of the polarity and the waveform of the offsetting current I₂. As a result of the offsetting effect, the electric current I₃ flowing to the earthing terminal E shows a low profile waveform as illustrated in FIG. 6.

Thus, the high frequency leak current I₁ can be reliably reduced by detecting the common mode current (high frequency leak current I₁) and producing an offsetting current I₂ having a waveform similar to that of the common mode current to forcibly offset the high frequency leak current I₁ with the offsetting current I₂ even when the switching circuit 11 operates with a high switching frequency.

Therefore, the switching frequency of the switching circuit 11 can be raised satisfactorily without adversely affecting the controllability of the operation of driving the inverter apparatus and giving rise to a failure on the part of some of the nearby electric appliances and breakers. Consequently, the capacity of the compressor 101 can be sufficiently improved to make the air conditioning apparatus operate with a satisfactory air conditioning capacity.

Particularly, while the HFC refrigerant contained in the refrigerating loop is electrically poorly insulative and tends to raise the intensity of the high frequency leak current I₁, the above embodiment can reliably reduce the high frequency leak current I₁ including the increment due to the poor insulation of the HFC refrigerant.

Additionally, this embodiment is effective for suppressing the voltage appearing on the motor shaft and on the noise terminal that can give rise to electromagnetic disturbances.

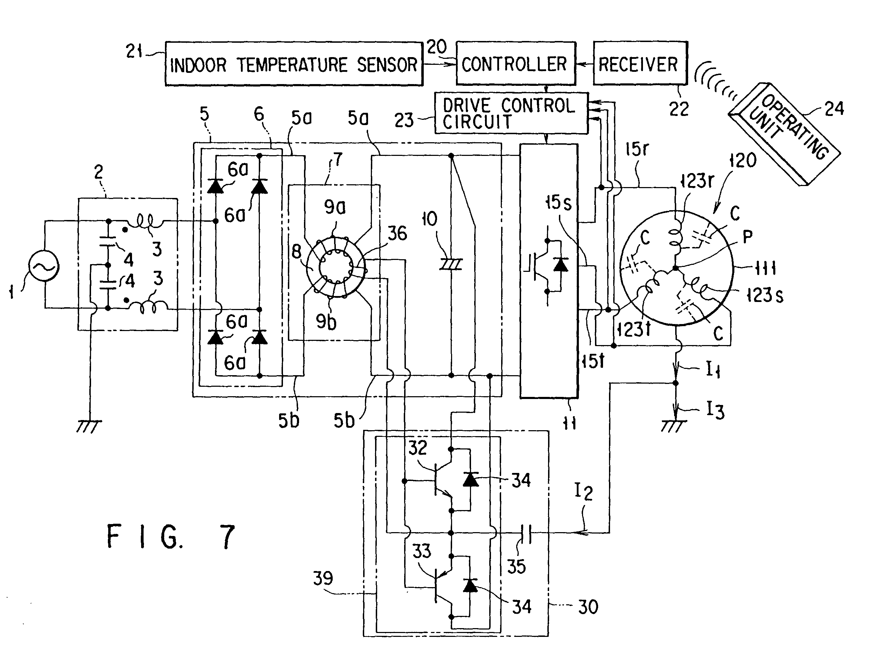

### [2] The second embodiment of the invention will be described by referring to FIG. 7.

In this embodiment, the current detector 31 of the first embodiment is replaced by a current detecting coil 36, which current detecting coil 36 is arranged onto the ferrite core 8 of the low-pass filter 7.

Thus, the current offset circuit 30 comprises a current detecting coil 36, an amplifier circuit 39 for amplifying the voltage generated in the current detecting coil 36 and having a pair of transistors 32, 33, a pair of diodes for the prevention of counter-electromotive force and a capacitor 35 for removing any DC fraction.

Otherwise, this embodiment has a configuration same as that of the first embodiment.

With this embodiment, the common mode current is detected by the current detecting coil 36 and an offsetting current I₂ having a waveform similar to that of the detected common mode current is produced so that the high frequency leak current I₁ is forcibly offset by the offsetting current I₂.

This embodiment has an advantage of low cost and down-sizing because the current detector 31 of the first embodiment is replaced by a simple current detecting coil 36.

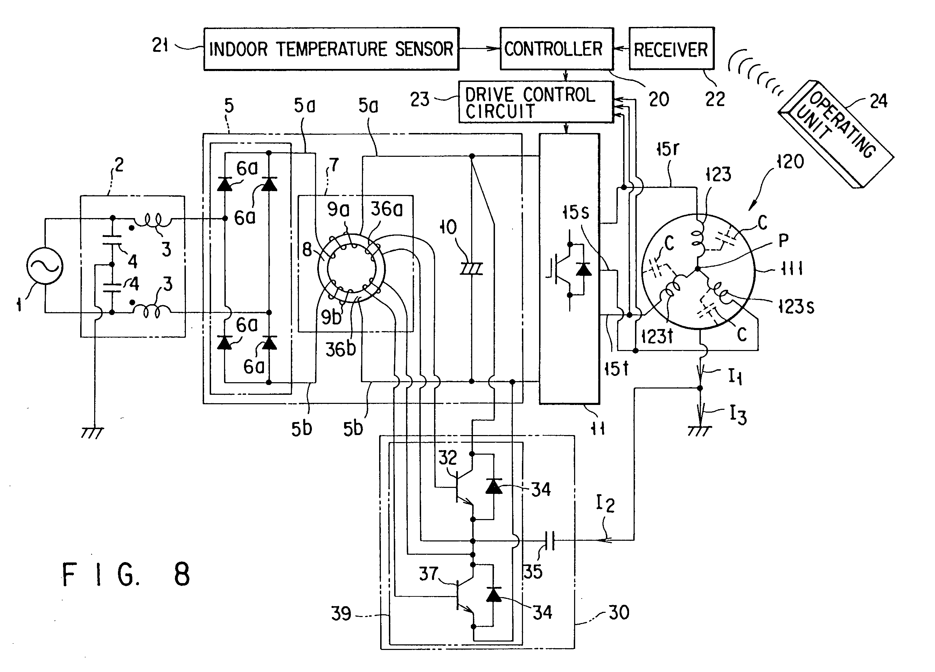

### [3] The third embodiment of the invention will be described by referring to FIG. 8.

In this embodiment, the current detector 31 is replaced by a pair of current detecting coils 36a, 36b drawn out from the current offset circuit 30 and arranged onto the ferrite core of the low-pass filter 7. Additionally, of the NPN-type transistor 32 and the PNP-type transistor 33 of the current offset circuit 30 of the first embodiment, the PNP-type transistor 33 is replaced by another NPN-type transistor 37.

The current offset circuit 30 comprises a pair of current detecting coils 36a, 36b, an amplifier circuit 39 having a pair of NPN-type transistors 32 for amplifying the voltages generated respectively at the current detecting coils 36a, 36b, diodes 34 respectively connected between the correctors and the emitters of the corresponding transistors 32, 37 for the prevention of counter-electromotive force and a capacitor for removing any DC fraction. Thus, it detects a common mode current having a positive level by means of the current detecting coil 36a and a common mode current having a negative level by means of the current detecting coil 36b and generates an electric current I₂ having a waveform similar to that of the common mode current detected by the current detector 31 by means of said amplifier circuit 39 in order to offset the leak current, which electric current I₂ is then output by way of said capacitor 35.

Otherwise, this embodiment has a configuration same as that of the first embodiment.

With this embodiment again, the common mode current is detected by the current detecting coil 36 and an offsetting current I₂ having a waveform similar to that of the detected common mode current is produced so that the high frequency leak current I₁ is forcibly offset by the offsetting current I₂.

This embodiment has an advantage that the offsetting current I₂ can be generated by using only NPN-type transistors that are available in a variety of types without forming a complementary push-pull (tristate) circuit comprising a PNP-type transistor that is limited in terms of type good for achieving a high withstand voltage and a high amplifying factor and adaptable to high frequencies.

It should be noted here that the current detecting coils 36a and 36b are wound in reverse directions relative to each other. More specifically, the current detecting coil 36a is wound in the sense of winding of the coil 9a of the low-pass filter 7, whereas the current detecting 36b is wound in the sense of winding of the coil 9b of the low-pass filter 7. The effect of offsetting the high frequency leak current I₁ of the embodiment will be insufficient if the current detecting coils 36a, 36b and the coils 9a, 9b of the low-pass filter 7 shows a reverse relationship in terms of the sense of winding.

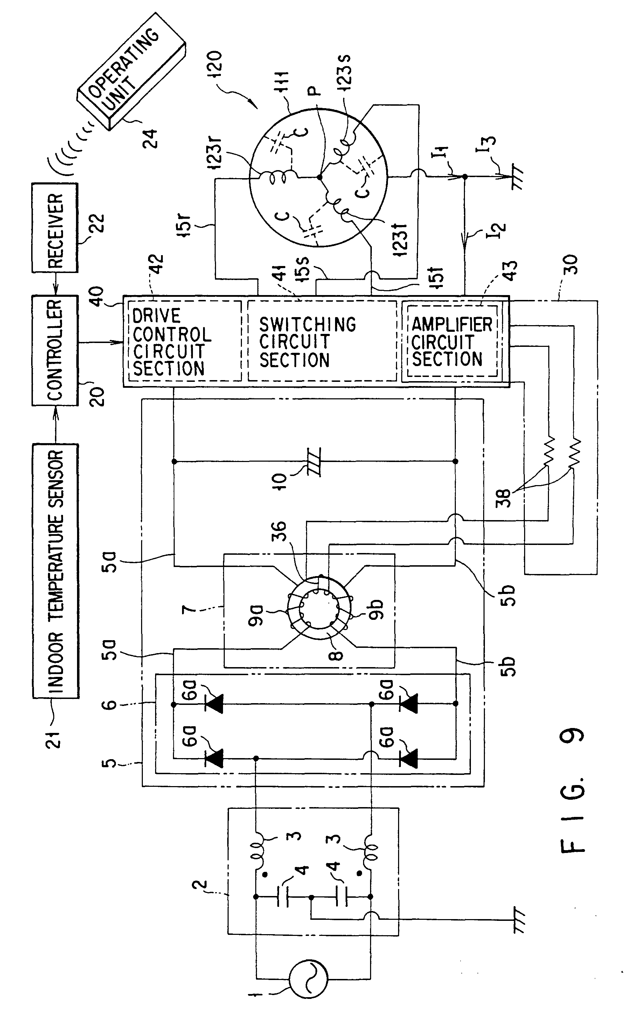

### [4] The fourth embodiment of the invention will be described by referring to FIG. 9.

In this embodiment, the switching circuit 11 of the second embodiment is replaced by an integrated circuit 40.

The integrated circuit 40 comprises as integral parts thereof a switching circuit section 41, a drive control circuit section 42 and an amplifier circuit section 43 arranged in a single chip, which correspond respectively to the switching circuit 11, the drive control circuit 23 and the current offset circuit 30 of the second embodiment.

The use of an integrated circuit 40 is advantageous in that the inverter apparatus is more protected against heat and electrically more insulated to improve the performance and that the area required for installation can be reduced significantly.

Regulating resistors 38 are inserted into the connection lines of the current detecting coils 36 of the current offset circuit 30. The regulating resistors 38 are designed to regulate the current amplification. factor hfe for the class A push-pull amplification of the amplifier circuit section 43.

The offsetting current I₂ can be made to show an optimal level that corresponds to the dispersion of the current amplification factor hfe of the class A push-pull amplification and the intensity of the high frequency leak current I₁ by selecting appropriate resistance values for the regulating resistors 38.

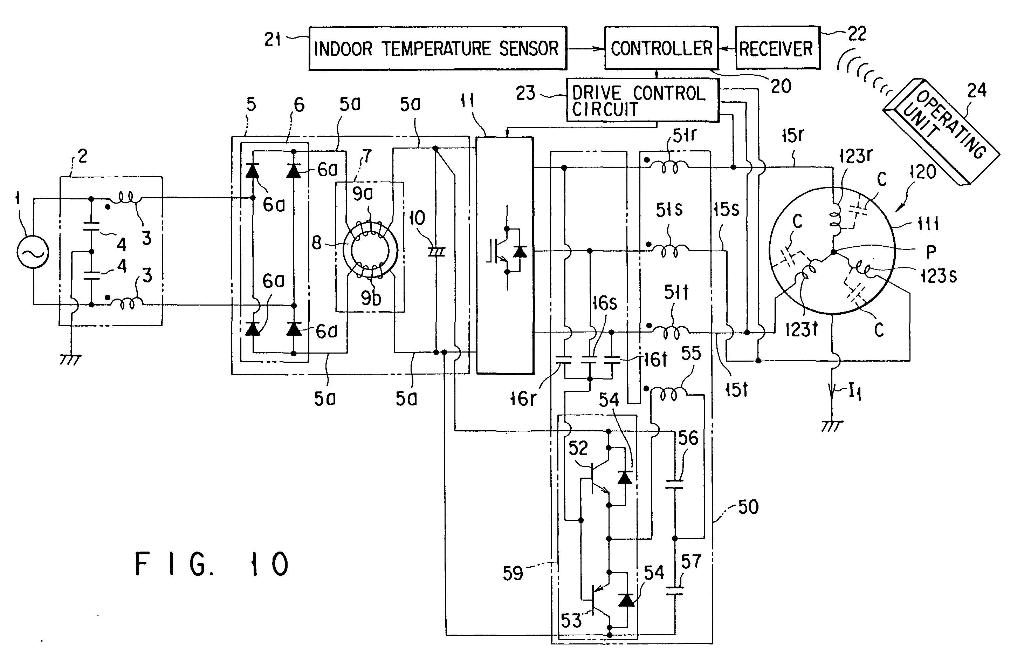

### [5] The fifth embodiment of the invention be described by referring to FIG. 10.

In this embodiment, the current offset circuit 30 is replaced by an current offset circuit 50.

The current offset circuit 50 comprises coils 51r, 51s and 51t inserted into respective conduction lines 15r, 15s and 15t, capacitors 16r, 16s and 16t connected to the respective conduction lines 15r, 15s and 15t for detecting a common mode voltage, an amplifier circuit 59 for carrying out the operation of class A push-pull amplification on the voltages obtained by way of these capacitors by means of a PNP-type transistor 52 and an NPN-type transistor 53, an LC resonance circuit composed of a coil 55 and a capacitor 57 connected to the output terminals of the amplifier circuit 59 and another LC resonance circuit composed of the coil 55 and a capacitor 58 also connected to the output terminals of the amplifier circuit 59. With the above arrangement, the common mode voltage is detected by means of the conduction lines 15r, 15s and 15t and the capacitors 16r, 16s and 16t and a reversely directed voltage is generated by said amplifier circuit 59 and the LC resonance circuits to offset the detected common mode voltage and applied to the conduction lines 15r, 15s and 15t by way of the mutual conductance of the coil 55 and the coils 51r, 51s and 51t.

The current offset circuit 50 is driven to operate by the output voltage of the DC circuit 5.

Otherwise, this embodiment has a configuration same as that of the second embodiment.

With the above arrangement, the common mode voltage generated between the common point P of the phase windings 123r, 123s and 123t and the earthing terminal E is detected by the current offset circuit 50 by way of the conduction lines 15r, 15s and 15t. Then, the current offset circuit 50 generates a reversely directed voltage for offsetting the detected common mode voltage and applies it to the conduction lines 15r, 15s and 15t to offset the common mode voltage.

As the common mode voltage is offset, no common mode current flows. As a result, the high frequency leak current I₁ can be reliably reduce the high frequency leak current I₁ if the switching circuit 11 is operated with a high switching frequency.

Additionally, this embodiment is effective for suppressing the voltage appearing on the motor shaft and on the noise terminal that can give rise to electromagnetic disturbances.

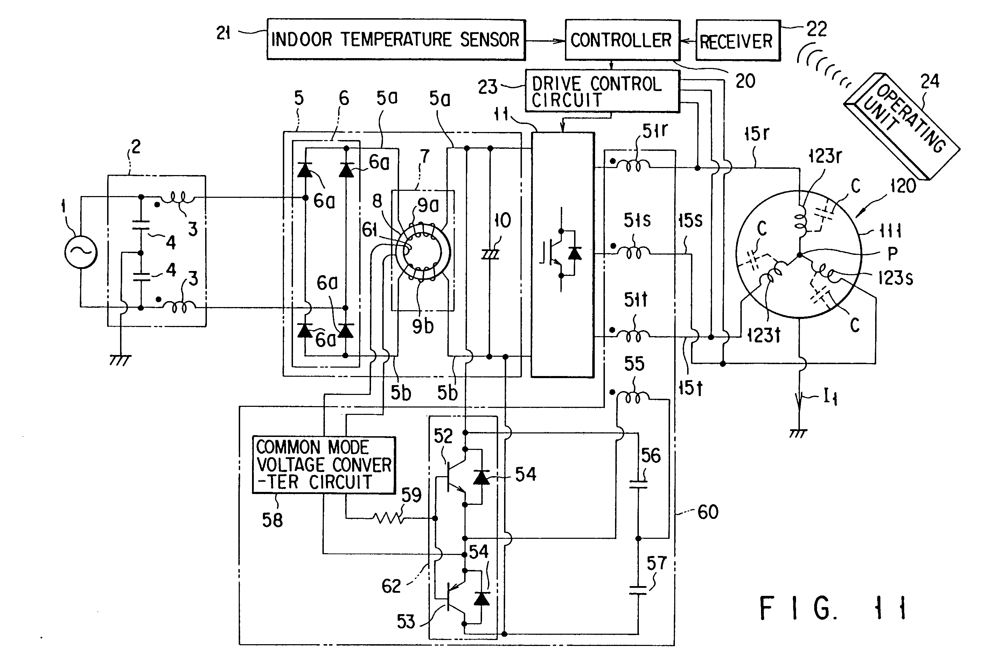

### [6] The sixth embodiment of the invention be described by referring to FIG. 11.

In this embodiment, the current offset circuit 50 of the fifth embodiment is replaced by a different current offset circuit 60. A current detecting coil 61 is drawn out of the current offset circuit 60 for detecting a common mode current and arranged onto the ferrite core 8 of the low-pass filter 7.

The current offset circuit 60 comprises the current detecting coil 61, conduction lines 15r, 15s and 15t, coils 51r, 51s and 51t inserted into the respective conduction lines 15r, 15s and 15t, a common mode voltage transforming circuit 58 for transforming the voltage generated in the current offset circuit 61 to a common mode voltage, an amplifier circuit 62 for subjecting the output voltage of the common mode transforming circuit 58 to class A push-pull amplification by means of an NPN-type transistor 52 and a PNP-type transistor 53, diodes 54 respectively connected between the correctors and the emitters of the corresponding transistors 52, 53 for the prevention of counter-electromotive force, an LC resonance circuit composed of a coil 55 and a capacitor 57 connected to the output terminals of the amplifier circuit 62 and another LC resonance circuit composed of the coil 55 and a capacitor 58 also connected to the output terminals of the amplifier circuit 62. With the above arrangement, the common mode current flowing from the phase windings 123r, 123s and 123t to the earthing terminal E is detected by means of the low-pass filter 7 and the detected common mode current is transformed into a common mode voltage, which is produced between the common point P and the earthing terminal E so that a reversely directed voltage is generated by said amplifier circuit 62 and the LC resonance circuits to offset the detected common mode voltage and applied to the conduction lines 15r, 15s and 15t by way of the mutual conductance of the coil 55 and the coils 51r, 51s and 51t.

The current offset circuit 60 is driven to operate by the output voltage of the DC circuit 5.

Otherwise, this embodiment has a configuration same as that of the second embodiment.

With the above arrangement, an electric current having an intensity proportional to the common mode current is detected by the current detecting circuit 61 and the voltage produced in the current detecting circuit 61 is transformed to a common mode voltage. Then, a reversely directed voltage is generated for offsetting the detected common mode voltage and applied to the conduction lines 15r, 15s and 15t to offset the common mode voltage.

As the common mode voltage is offset, no common mode current flows. As a result, the high frequency leak current I₁ can be reliably reduce the high frequency leak current I₁ if the switching circuit 11 is operated with a high switching frequency.

Additionally, this embodiment is effective for suppressing the voltage appearing on the motor shaft and on the noise terminal that can give rise to electromagnetic disturbances.

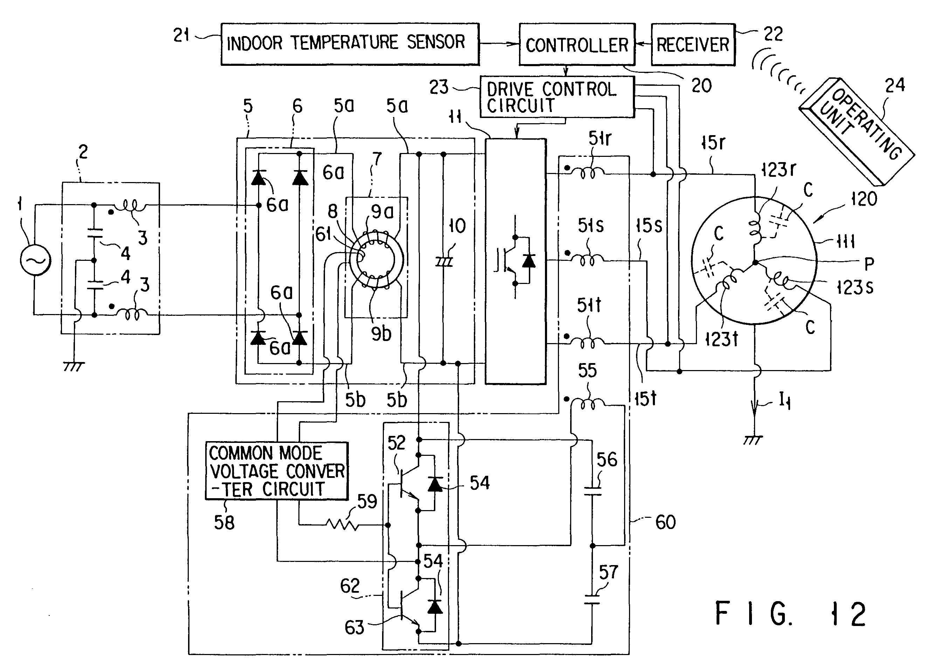

### [7] The seventh embodiment of the invention be described by referring to FIG. 12.

In this embodiment, the PNP-type transistor 53 of the current offset circuit 60 of the sixth embodiment is replaced by another NPN-type transistor 63.

This embodiment has an advantage that the offsetting current I₂ can be generated by using only NPN-type transistors that are available in a variety of types without forming a complementary push-pull (tristate) circuit comprising a PNP-type transistor that is limited in terms of type good for achieving a high withstand voltage and a high amplifying factor and adaptable to high frequencies.

Otherwise, this embodiment has a configuration same as that of the sixth embodiment and is as effective as the sixth embodiment.

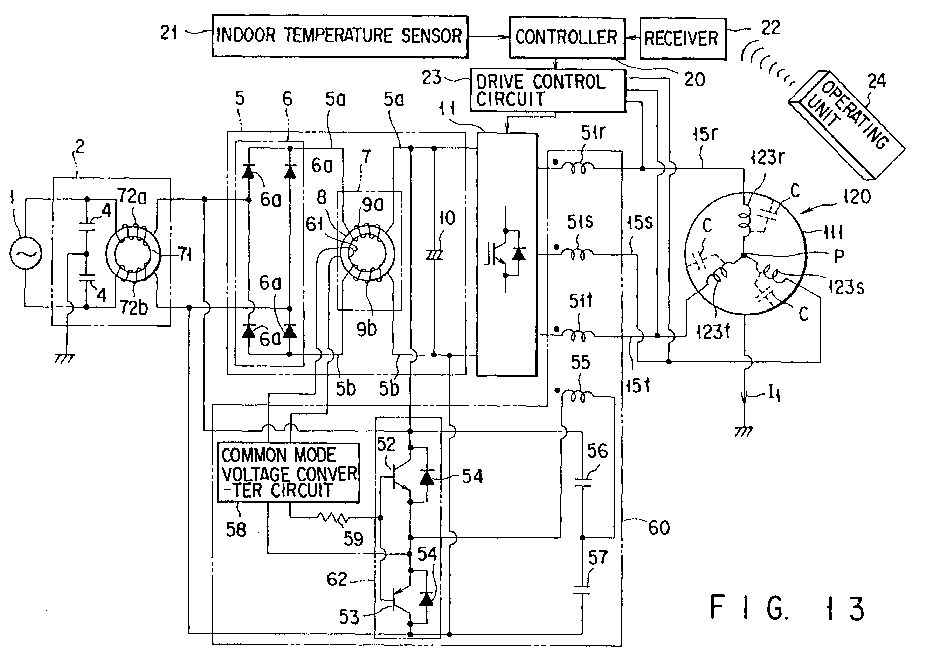

### [8] The eighth embodiment of the invention be described by referring to FIG. 13.

In this embodiment, the coils 3 of the low-pass filter 2 of the preceding embodiments are replaced by coils 72a, 72b, which are arranged onto a ferrite core 71. The voltage obtained at the downstream of the low-pass filter 2 is used to drive the current offset circuit 60.

Otherwise, this embodiment has a configuration same as that of the sixth embodiment and is as effective as the sixth embodiment.

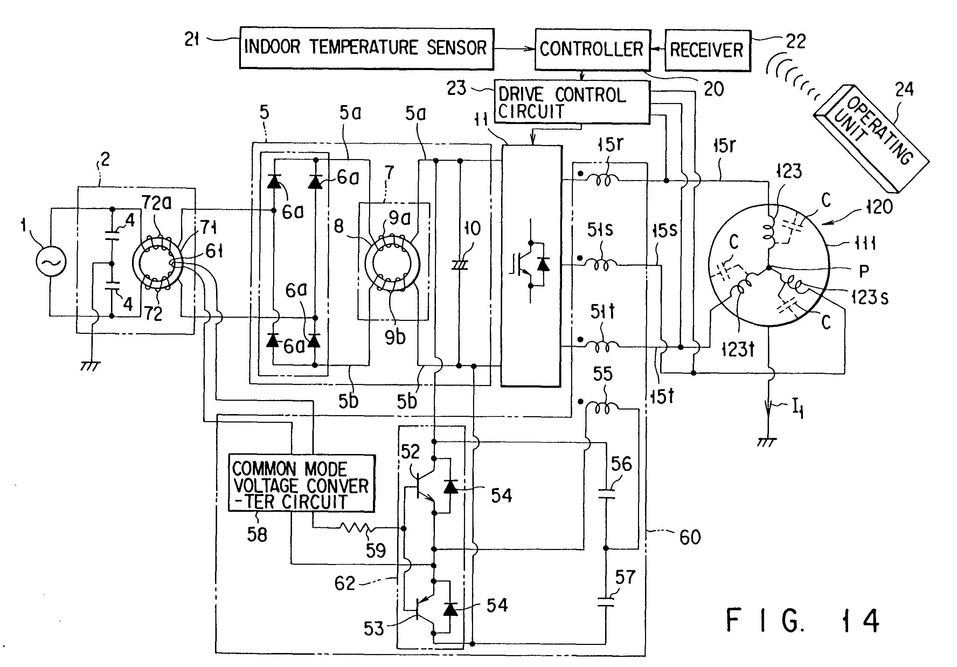

### [9] The ninth embodiment of the invention be described by referring to FIG. 14.

In this embodiment again, an electric current having an intensity proportional to the common mode current is detected by the current detecting circuit 61 and the voltage produced in the current detecting circuit 61 is transformed to a common mode voltage. Then, a reversely directed voltage is generated for offsetting the detected common mode voltage and applied to the conduction lines 15r, 15s and 15t to offset the common mode voltage.

### [10] The tenth embodiment of the invention will be described below.

In any of the preceding embodiments, ester type or ether type lubricant oil and mineral oil type or alkylbenzene type lubricant oil are used for the lubricant oil 140 contained in the closed case 111.

While ester type or ether type lubricant oil is compatible with the HFC refrigerant of the refrigerating cycle, it shows a high dielectric constant and can increase the high frequency leak current I₁. On the other hand, mineral oil type or alkylbenzene type lubricant oil is not very compatible with the HFC refrigerant, it shows a low dielectric constant.

Of the lubricant oil 140 discharged from the compressor 101 with the refrigerant, the ester type or ether type component is dissolved into the lubricant oil 140 to reduce its viscosity. The lubricant oil 140 with a reduced viscosity shows a high fluidity as a matter of course.

The mineral oil type or alkylbenzene type component of the lubricant oil 140 discharged from the compressor 101 with the refrigerant and not compatible with the latter flows also smoothly through the closed piping of the refrigerating cycle with the former component of the lubricant oil 140 having a reduced viscosity to go back to the compressor 101 reliably.

Thus, the lubricant oil 140 shows an enhanced fluidity in the piping of the refrigerating cycle to prevent any shortage on the part of the lubricant oil. in the compressor 101 and ensures a stable and safe operation of the compressor 101. Consequently, the compressor 101 can enjoy a prolonged service life.

While both of the refrigerant-compatible component and the refrigerant-non-compatible component of the lubricant oil 140 adhere to the motor 120 in the compressor 101 in the initial stages of operation, the average dielectric constant of the two components is relatively low. Additionally, the component of the lubricant oil 140 having a higher dielectric constant is dissolved into the refrigerant to reduce its viscosity so that it will less easily come off from the motor 120 as the motor 120 is operated longer. In other words, the component of the lubricant oil 140 having a lower dielectric constant (less compatible with the refrigerant) remains more on the motor than its higher dielectric constant counterpart.

Thus, since the dielectric constant of the lubricant oil 140 adhering to the motor 120 can be minimized to remarkably improve the effect of reducing the high frequency leak current I₁.

Table 1 below shows some of the characteristic properties of lubricant oil of various types.

**Table 1**

| Lubricant oil | Polarity | Dielectric constant | Compatibility with HFC |
|---|---|---|---|
| Ester type | Yes | Medium (cir. 3) | Good |
| Ether type | Yes | High (cir. 4-6) | Good |
| Mineral oil type | No | Low (cir. 2) | No |
| Alkylbenzene type | No | Low (cir. 2) | No |

Thus, ester or ether type lubricant oil has a "medium" or "high dielectric constant and its molecules shows polarity. Mineral oil type or alkylbenzene type lubricant oil has a "low" dielectric constant and does not show any polarity.

Table 2 below shows some of the characteristic properties of typical HFC refrigerants.

**Table 2**

| Refrigerant | Dielectric constant (cir.) as liquid |
|---|---|
| HFC-32 | 11.3 |
| HFC-125 | 4.1 |
| HFC-134a | 8.4 |
| HCFC-22 | 5.6 |

Table 3 below shows the compatibility and the dielectric of some combinations of lubricant oil and HFC refrigerant.

**Table 3**

| Refrigerant | Lubricant Oil | Compatibility (ability o flowing back o lubricant oil) | Dielectric constant |
|---|---|---|---|
| HCFC-22 | Mineral oil type | Good | Low |
| ]Various HFC | Ester or ether type | Good | High or medium |
| various HFC | Mineral oil or alkyl-benzene type | No Good | Low |

The refrigerant existing in the closed case 111 of the compressor 101 is partly dissolved into the lubricant oil 140 and the rest is gasified. The gasified refrigerant does not affect the high frequency leak current I₁ due to its dielectric constant.

The refrigerant to be sealed in the refrigerating cycle may be HFE refrigerant (hydrofluoroether) instead of HFC refrigerant.

## Claims

1. An inverter apparatus connected for outputting drive power to a brushless DC motor (120) having three phase windings (123r, 123s, 123t) and housed in a closed case (111) of a compressor (101), said closed case (111) being connected to an earthing terminal (E), the inverter apparatus comprising:
a DC circuit (5) for transforming the voltage of an AC power supply (1) to a DC voltage, said DC circuit (5) having output lines (5a, 5b);
a switching circuit (11) for transforming the output voltage of the DC circuit (5) to a high frequency voltage by switching operations and outputting the high frequency voltage as said drive power; and
an offsetting means for offsetting the leak current flowing from the phase windings (123r, 123s, 123t) of said brushless DC motor (120) to the earthing terminal (E) by way of said closed case (111),
**characterized in that**
said offsetting means comprises a current detector (31) for detecting a common mode current (=I1) flowing from said phase windings (123r, 123s, 123t) to said earthing terminal (E) by way of said closed case (111) and a current offset circuit (30) for producing an electric current (I2) having a waveform similar to that of the common mode current (=I1) detected by the current detector (31), said current offset circuit (30) being connected to said output lines (5a, 5b) and having an output terminal connected to said earthing terminal (E), wherein said current detector (31) detects said common mode current (=I1) from said output lines (5a, 5b).

2. An inverter apparatus connected for outputting drive power to a brushless DC motor (120) having three phase windings (123r, 123s, 123t) and housed in a closed case (111) of a compressor (101), said closed case (111) being connected to an earthing terminal (E), the inverter apparatus comprising:
a DC circuit (5) for transforming the voltage of an AC power supply (1) to a DC voltage, said DC circuit (5) having output lines (5a, 5b);
a switching circuit (11) for transforming the output voltage of the DC circuit (5) to a high frequency voltage by switching operations and outputting the high frequency voltage as said drive power; and
an offsetting means for offsetting the leak current flowing from the phase windings (123r, 123s, 123t) of said brushless DC motor (120) to the earthing terminal (E) by way of said closed case (111),
**characterized in that**
said offsetting means comprises a current detector (31) for detecting a common mode current (=I1) flowing from said phase windings (123r, 123s, 123t) to said earthing terminal (E) by way of said closed case (111) and a current offset circuit (30) ;
the inverter apparatus further comprises a noise removing filter (7) arranged on said output lines (5a, 5b), said filter (7) comprising coils (9a, 9b) inserted respectively into said output lines (5a, 5b) and a core (8) wound by said coils (9a, 9b), wherein said current detector (31) detects said common mode current (=I1) by means of said filter (7);
said current offset circuit (30) comprises a current detecting coil (36) wound around said core (8) of said filter (7) and an amplifier circuit (39) connected to said detecting coil (36) and to one of said output lines (5b) for amplifying the voltage generated in said current detecting coil (36), detects said common mode current (=I1) by means of said current detecting coil (36) and produces an electric current (I2) having a waveform similar to that of the common mode current (=I1) to said amplifier circuit (39), wherein said amplifier circuit (39) is a circuit comprising a pair of transistors (32, 33) for class A push-pull amplification.

3. An inverter apparatus connected for outputting drive power to a brushless DC motor (120) having three phase windings (123r, 123s, 123t) and housed in a closed case (111) of a compressor (101), said closed case (111) being connected to an earthing terminal (E), the inverter apparatus comprising:
a DC circuit (5) for transforming the voltage of an AC power supply (1) to a DC voltage, said DC circuit (5) having output lines (5a, 5b);
a switching circuit (11) for transforming the output voltage of the DC circuit (5) to a high frequency voltage by switching operations and outputting the high frequency voltage as said drive power; and
an offsetting means for offsetting the leak current flowing from the phase windings (123r, 123s, 123t) of said brushless DC motor (120) to the earthing terminal (E) by way of said closed case (111),
**characterized in that**
said offsetting means comprises a current detector (31) for detecting a common mode current (=I1) flowing from said phase windings (123r, 123s, 123t) to said earthing terminal (E) by way of said closed case (111) and a current offset circuit (30) ;
the inverter apparatus further comprises a noise removing filter (7) arranged on said output lines (5a, 5b), said filter (7) comprising coils (9a, 9b) inserted respectively into said output lines (5a, 5b) and a core (8) wound by said coils (9a, 9b), wherein said current detector (31) detects said common mode current (=I1) by means of said filter (7) ;
said current offset circuit (30) comprises a pair of current detecting coils (36a, 36b) wound around said core (8) of said filter (7) and a pair of amplifier circuits (39) connected to said pair of detecting coils (36a, 36b) and one of said output lines (5b) for amplifying the voltage generated by the current detecting coils (36a, 36b) by means of respective transistors (32, 37), detects said common mode current (=I1) by means of said current detecting coils (36a, 36b) and produces an electric current (I2) having a waveform similar to that of the common mode current (=I1) to said amplifier circuits (39).

4. An apparatus according to claims 2 and 3, characterized by further comprising:
a drive control circuit (23) for driving and controlling said switching circuit (11); and
an integrated circuit (40) having said drive control circuit (23), said switching circuit (11) and said amplifier circuit (39) as integral parts thereof.

5. An inverter apparatus connected for outputting drive power to a brushless DC motor (120) having three phase windings (123r, 123s, 123t) and housed in a closed case (111) of a compressor (101), said closed case (111) being connected to an earthing terminal (E), the inverter apparatus comprising:
a DC circuit (5) for transforming the voltage of an AC power supply (1) to a DC voltage;
a switching circuit (11) for transforming the output voltage of the DC circuit (5) to a high frequency voltage by switching operations and outputting the high frequency voltage as said drive power; and
an offsetting means for offsetting the leak current flowing from the phase windings (123r, 123s, 123t) of said brushless DC motor (120) to the earthing terminal (E) by way of said closed case (111),
**characterized in that**
the inverter apparatus further comprises conduction lines (15r, 15s, 15t) for leading the output voltage of said switching circuit (11) to the phase windings (123r, 123s, 123t) of said brushless DC motor (120); and
said offsetting means comprises coils (51r, 51s, 51t) and capacitors (16r, 16s, 16t), connected to said conduction lines (15r, 15s, 15t), and an LC resonance circuit (55, 57, 56) and detects a common mode voltage generated between the common point (P) of the phase windings (123r, 123s, 123t) of said brushless DC motor (120) and said earthing terminal (E) by way of said conduction lines (15r, 15s, 15t) and said capacitors (16r, 16s, 16t) and applies a reversely directed voltage to said conduction lines (15r, 15s, 15t) via said LC resonance circuit (55, 57, 56) and said coils (51r, 51s, 51t) to offset the detected common mode voltage.

6. An inverter apparatus connected for outputting drive power to a brushless DC motor (120) having three phase windings (123r, 123s, 123t) and housed in a closed case (111) of a compressor (101), said closed case (111) being connected to an earthing terminal (E), the inverter apparatus comprising:
a DC circuit (5) for transforming the voltage of an AC power supply (1) to a DC voltage;
a switching circuit (11) for transforming the output voltage of the DC circuit (5) to a high frequency voltage by switching operations and outputting the high frequency voltage as said drive power; and
an offsetting means for offsetting the leak current flowing from the phase windings (123r, 123s, 123t) of said brushless DC motor (120) to the earthing terminal (E) by way of said closed case (111),
**characterized in that**
the inverter apparatus further comprises conduction lines (15r, 15s, 15t) for leading the output voltage of said switching circuit (11) to the phase windings (123r, 123s, 123t) of said brushless DC motor (120), and a noise removing filter (7) arranged between said DC circuit (5) and said switching circuit (11); and
said offsetting means comprises coils (51r, 51s, 51t) connected to said conduction lines (15r, 15s, 15t) and an LC resonance circuit (55, 57, 56) and detects a common mode current (=I1) flowing from said phase windings (123r, 123s, 123t) of said brushless DC motor (12) to said earthing terminal (E) via said closed case (11) by means of said filter (7), transforms the common mode current (=I1) to a common mode voltage produced between a common point (P) of said phase windings (123r, 123s, 123t) and said earthing terminal (E) and applies a reversely directed voltage to said conduction lines (15r, 15s, 15t) via said LC resonance circuit (55, 57, 56) and said coils (51r, 51s, 51t) to offset the detected common mode voltage.

7. An apparatus according to claims 5 and 6, **characterized in that**
said offsetting means is driven to operate by the output voltage of said DC circuit (5).

8. An inverter apparatus connected for outputting drive power to a brushless DC motor (120) having three phase windings (123r, 123s, 123t) and housed in a closed case (111) of a compressor (101), said closed case (111) being connected to an earthing terminal (E), the inverter apparatus comprising:
a DC circuit (5) for transforming the voltage of an AC power supply (1) to a DC voltage;
a switching circuit (11) for transforming the output voltage of the DC circuit (5) to a high frequency voltage by switching operations and outputting the high frequency voltage as said drive power; and
an offsetting means for offsetting the leak current flowing from the phase windings (123r, 123s, 123t) of said brushless DC motor (120) to the earthing terminal (E) by way of said closed case (111),
**characterized in that**
the inverter apparatus further comprises conduction lines (15r, 15s, 15t) for leading the output voltage of said switching circuit (11) to the phase windings (123r, 123s, 123t) of said brushless DC motor (120), a first noise removing filter (2) arranged between said AC power supply (1) and said DC circuit (5), and a second noise removing filter (7) arranged between said DC circuit (5) and said switching circuit (11); and
said offsetting means comprises coils (51r, 51s, 51t) connected to said conduction lines (15r, 15s, 15t) and an LC resonance circuit (55, 57, 56) and detects a common mode current (=I1) flowing from said phase windings (123r, 123s, 123t) of said brushless DC motor (12) to said earthing terminal (E) via said closed case (11) by means of said second filter (7), transforms the common mode current (=I1) to a common mode voltage produced between a common point (P) of said phase windings (123r, 123s, 123t) and said earthing terminal (E) and applies a reversely directed voltage to said conduction lines (15r, 15s, 15t) via said LC resonance circuit (55, 57, 56) and said coils (51r, 51s, 51t) to offset the detected common mode voltage.

9. An inverter apparatus connected for outputting drive power to a brushless DC motor (120) having three phase windings (123r, 123s, 123t) and housed in a closed case (111) of a compressor (101), said closed case (111) being connected to an earthing terminal (E), the inverter apparatus comprising:
a DC circuit (5) for transforming the voltage of an AC power supply (1) to a DC voltage;
a switching circuit (11) for transforming the output voltage of the DC circuit (5) to a high frequency voltage by switching operations and outputting the high frequency voltage as said drive power; and
an offsetting means for offsetting the leak current flowing from the phase windings (123r, 123s, 123t) of said brushless DC motor (120) to the earthing terminal (E) by way of said closed case (111),
**characterized in that**
the inverter apparatus further comprises conduction lines (15r, 15s, 15t) for leading the output voltage of said switching circuit (11) to the phase windings (123r, 123s, 123t) of said brushless DC motor (120), a first noise removing filter (2) arranged between said AC power supply (1) and said DC circuit (5), and a second noise removing filter (7) arranged between said DC circuit (5) and said switching circuit (11); and
said offsetting means comprises coils (51r, 51s, 51t) connected to said conduction lines (15r, 15s, 15t) and an LC resonance circuit (55, 57, 56) and detects a common mode current (=il) flowing from said phase windings (123r, 123s, 123t) of said brushless DC motor (12) to said earthing terminal (E) via said closed case (11) by means of said second filter (7), transforms the common mode current (=I1) to a common mode voltage produced between a common point (P) of said phase windings (123r, 123s, 123t) and said earthing terminal (E) and applies a reversely directed voltage to said conduction lines (15r, 15s, 15t) via said LC resonance circuit (55, 57, 56) and said coils (51r, 51s, 51t) to offset the detected common mode voltage, while it is driven to operate by the voltage coming through said second filter.

10. An apparatus according to one of claims 1 to 9, **characterized in that**
said compressor (101) draws in refrigerant and compresses and discharges it, said refrigerant being hydrofluorocarbon.

11. An apparatus according to claim 1, **characterized in that**
said compressor (101) is provided with lubricant oil (140) filled in said closed case (111), said lubricant oil (140) being either of ester type or of ether type.

12. An apparatus according to claim 1, **characterized in that**
said compressor (101) is provided with lubricant oil (140) filled in said closed case (111), said lubricant oil (140) being a mixture of lubricant oil having a high dielectric constant and lubricant oil having a low dielectric constant.

13. An apparatus according to claim 1, **characterized in that**
said compressor (101) is provided with lubricant oil (140) filled in said closed case (111), said lubricant oil (140) being a mixture of lubricant oil showing polarity and lubricant oil showing no polarity.

## Patentansprüche

1. Invertiervorrichtung, die geschaltet ist, um Antriebsleistung an einen bürstenlosen Gleichstrommotor (120) auszugeben, der drei Phasenwicklungen (123r, 123s, 123t) aufweist und in einem geschlossenen Gehäuse (111) eines Kompressors (101) untergebracht ist, wobei das geschlossene Gehäuse (111) mit einem Erdungsanschluß (E) verbunden ist, wobei die Invertiervorrichtung umfaßt:
eine Gleichstromschaltung (5) zum Transformieren der Spannung einer Wechselstromversorgung (1) in eine Gleichspannung, wobei die Gleichstromschaltung (5) Ausgangsleitungen (5a, 5b) aufweist;
eine Umschaltungs-Schaltung (11) zum Transformieren der Ausgangsspannung der Gleichstromschaltung (5) in eine Hochfrequenzspannung durch Umschaltvorgänge und zum Ausgeben der Hochfrequenzspannung als die Antriebsleistung; und
ein Offset-Mittel zum Versetzen des von den Phasenwicklungen (123r, 123s, 123t) des bürstenlosen Gleichstrommotors (120) über das geschlossene Gehäuse (111) zu dem Erdungsanschluß (E) fließenden Leckstroms,
**dadurch gekennzeichnet**, daß
das Offset-Mittel einen Stromdetektor (31) zum Erfassen eines Common-Mode-Stroms (=I1), der von den Phasenwicklungen (123r, 123s, 123t) zu dem Erdungsanschluß (E) durch das geschlossene Gehäuse (111) fließt, und eine Strom-Offset-Schaltung (30) zum Erzeugen eines elektrischen Stroms (I2), der einen Signalverlauf ähnlich demjenigen des durch den Stromdetektor (31) erfaßten Common-Mode-Stroms (=I1) aufweist, umfaßt, wobei die Strom-Offset-Schaltung (30) mit den Ausgangsleitungen (5a, 5b) verbunden ist und einen mit dem Erdungsanschluß (E) verbundenen Ausgangsanschluß aufweist, wobei der Stromdetektor (31) den Common-Mode-Strom (=I1) von den Ausgangsleitungen (5a, 5b) erfaßt.

2. Invertiervorrichtung, die geschaltet ist, um Antriebsleistung an einen bürstenlosen Gleichstrommotor (120) auszugeben, der drei Phasenwicklungen (123r, 123s, 123t) aufweist und in einem geschlossenen Gehäuse (111) eines Kompressors (101) untergebracht ist, wobei das geschlossene Gehäuse (111) mit einem Erdungsanschluß (E) verbunden ist, wobei die Invertiervorrichtung umfaßt:
eine Gleichstromschaltung (5) zum Transformieren der Spannung einer Wechselstromversorgung (1) in eine Gleichspannung, wobei die Gleichstromschaltung (5) Ausgangsleitungen (5a, 5b) aufweist;
eine Umschaltungs-Schaltung (11) zum Transformieren der Ausgangsspannung der Gleichstromschaltung (5) in eine Hochfrequenzspannung durch Umschaltvorgänge und zum Ausgeben der Hochfrequenzspannung als die Antriebsleistung; und
ein Offset-Mittel zum Versetzen des von den Phasenwicklungen (123r, 123s, 123t) des bürstenlosen Gleichstrommotors (120) über das geschlossene Gehäuse (111) zu dem Erdungsanschluß (E) fließenden Leckstroms,
**dadurch gekennzeichnet**, daß
das Offset-Mittel einen Stromdetektor (31) zum Erfassen eines Common-Mode-Stroms (=I1), der von den Phasenwicklungen (123r, 123s, 123t) zu dem Erdungsanschluß (E) über das geschlossene Gehäuse (111) fließt, und eine Strom-Offset-Schaltung (30) umfaßt;
die Invertiervorrichtung ferner ein an den Ausgangsleitungen (5a, 5b) angeordnetes Rauschentfernungsfilter (7) aufweist, wobei das Filter (7) Spulen (9a, 9b), die jeweils in die Ausgangsleitungen (5a, 5b) eingefügt sind, und einen um die Spulen (9, 9b) gewundenen Kern (8) umfaßt, wobei der Stromdetektor (31) den Common-Mode-Strom (=I1) mittels des Filters (7) erfaßt;
wobei die Strom-Offset-Schaltung (30) eine um den Kern (8) des Filters (7) gewundene Stromerfassungsspule (36) und eine mit der Erfassungsspule (36) und mit einer der Ausgangsleitungen (5b) verbundene Verstärkerschaltung (39) zum Verstärken der in der Stromerfassungsspule (36) erzeugten Spannung umfaßt, den Common-Mode-Strom (=I1) mittels der Stromerfassungsspule (36) erfaßt und einen elektrischen Strom (I2) an die Verstärkerschaltung (39) erzeugt, der einen Signalverlauf ähnlich demjenigen des Common-Mode-Stroms (=I1) aufweist, wobei die Verstärkerschaltung (39) eine Schaltung ist, die ein Paar von Transistoren (32, 33) für eine Push-Pull-Verstärkung der Klasse A umfaßt.

3. Invertiervorrichtung, die geschaltet ist, um Antriebsleistung an einen bürstenlosen Gleichstrommotor (120) auszugeben, der drei Phasenwicklungen (123r, 123s, 123t) aufweist und in einem geschlossenen Gehäuse (111) eines Kompressors (101) untergebracht ist, wobei das geschlossene Gehäuse (111) mit einem Erdungsanschluß (E) verbunden ist, wobei die Invertiervorrichtung umfaßt:
eine Gleichstromschaltung (5) zum Transformieren der Spannung einer Wechselstromversorgung (1) in eine Gleichspannung, wobei die Gleichstromschaltung (5) Ausgangsleitungen (5a, 5b) aufweist;
eine Umschaltungs-Schaltung (11) zum Transformieren der Ausgangsspannung der Gleichstromschaltung (5) in eine Hochfrequenzspannung durch Umschaltvorgänge und zum Ausgeben der Hochfrequenzspannung als die Antriebsleistung; und
ein Offset-Mittel zum Versetzen des von den Phasenwicklungen (123r, 123s, 123t) des bürstenlosen Gleichstrommotors (120) über das geschlossene Gehäuse (111) zu dem Erdungsanschluß (E) fließenden Leckstroms,
**dadurch gekennzeichnet**, daß
das Offset-Mittel einen Stromdetektor (31) zum Erfassen eines Common-Mode-Stroms (=I1), der von den Phasenwicklungen (123r, 123s, 123t) zu dem Erdungsanschluß (E) über das geschlossene Gehäuse (111) fließt, und eine Strom-Offset-Schaltung (30) umfaßt;
die Invertiervorrichtung ferner ein an den Ausgangsleitungen (5a, 5b) angeordnetes Rauschentfernungsfilter (7) aufweist, wobei das Filter (7) Spulen (9a, 9b), die jeweils in die Ausgangsleitungen (5a, 5b) eingefügt sind, und einen um die Spulen (9, 9b) gewundenen Kern (8) umfaßt, wobei der Stromdetektor (31) den Common-Mode-Strom (=I1) mittels des Filters (7) erfaßt;
die Strom-Offset-Schaltung (30) ein Paar von Stromerfassungsspulen (36a, 36b), die um den Kern (8) des Filters (7) gewunden sind, und ein Paar von Verstärkerschaltungen (39) aufweist, die mit dem Paar Erfassungsspulen (36a, 36b) und einer der Ausgangsleitungen (5b) zum Verstärken der von den Stromerfassungsspulen (36a, 36b) mittels der jeweiligen Transistoren (32, 37) erzeugten Spannung verbunden sind, den Common-Mode-Strom (=I1) mittels der Stromerfassungsspulen (36a, 36b) erfaßt und einen elektrischen Strom (I2) an die Verstärkerschaltung (39) erzeugt, der einen Signalverlauf ähnlich demjenigen des Common-Mode-Stroms (=I1) aufweist.

4. Vorrichtung gemäß Anspruch 2 oder 3, ferner gekennzeichnet durch:
eine Treibersteuerschaltung (23) zum Treiben und Steuern der Umschaltungs-Schaltung (11); und
eine die Treibersteuerschaltung (23) aufweisende integrierte Schaltung (40), wobei die Umschaltungs-Schaltung (11) und die Verstärkerschaltung (39) integrierte Teile dieser sind.

5. Invertiervorrichtung, die geschaltet ist, um Antriebsleistung an einen bürstenlosen Gleichstrommotor (120) auszugeben, der drei Phasenwicklungen (123r, 123s, 123t) aufweist und in einem geschlossenen Gehäuse (111) eines Kompressors (101) untergebracht ist, wobei das geschlossene Gehäuse (111) mit einem Erdungsanschluß (E) verbunden ist, wobei die Invertiervorrichtung umfaßt:
eine Gleichstromschaltung (5) zum Transformieren der Spannung einer Wechselstromversorgung (1) in eine Gleichspannung;
eine Umschaltungs-Schaltung (11) zum Transformieren der Ausgangsspannung der Gleichstromschaltung (5) in eine Hochfrequenzspannung durch Umschaltvorgänge und zum Ausgeben der Hochfrequenzspannung als die Antriebsleistung; und
ein Offset-Mittel zum Versetzen des von den Phasenwicklungen (123r, 123s, 123t) des bürstenlosen Gleichstrommotors (120) über das geschlossene Gehäuse (111) zu dem Erdungsanschluß (E) fließenden Leckstroms,
**dadurch gekennzeichnet**, daß
die Invertiervorrichtung ferner Stromleitungen (15r, 15s, 15t) zum Führen der Ausgangsspannung der Umschaltungs-Schaltung (11) an die Phasenwicklungen (123r, 123s, 123t) des bürstenlosen Gleichstrommotors (120) umfaßt; und
das Offset-Mittel Spulen (51r, 51s, 51t) und Kondensatoren (16r, 16s, 16t), die mit den Stromleitungen (15r, 15s, 15t) verbunden sind, und eine LC-Resonanzschaltung (55, 57, 56) umfaßt, und eine zwischen dem gemeinsamen Punkt (P) der Phasenwicklungen (123r, 123s, 123t) des bürstenlosen Gleichstrommotors (120) und dem Erdungsanschluß (E) erzeugte Common-Mode-Spannung mittels der Stromleitungen (15r, 15s, 15t) und der Kondensatoren (16r, 16s, 16t) erfaßt und eine umgekehrt gerichtete Spannung an die Stromleitungen (15r, 15s, 15t) über die LC-Resonanzschaltung (55, 57, 56) und die Spulen (51r, 51s, 51t) anlegt, um die erfaßte Common-Mode-Spannung zu versetzen.

6. Invertiervorrichtung, die geschaltet ist, um Antriebsleistung an einen bürstenlosen Gleichstrommotor (120) auszugeben, der drei Phasenwicklungen (123r, 123s, 123t) aufweist und in einem geschlossenen Gehäuse (111) eines Kompressors (101) untergebracht ist, wobei das geschlossene Gehäuse (111) mit einem Erdungsanschluß (E) verbunden ist, wobei die Invertiervorrichtung umfaßt:
eine Gleichstromschaltung (5) zum Transformieren der Spannung einer Wechselstromversorgung (1) in eine Gleichspannung;
eine Umschaltungs-Schaltung (11) zum Transformieren der Ausgangsspannung der Gleichstromschaltung (5) in eine Hochfrequenzspannung durch Umschaltvorgänge und zum Ausgeben der Hochfrequenzspannung als die Antriebsleistung; und
ein Offset-Mittel zum Versetzen des von den Phasenwicklungen (123r, 123s, 123t) des bürstenlosen Gleichstrommotors (120) über das geschlossene Gehäuse (111) zu dem Erdungsanschluß (E) fließenden Leckstroms,
**dadurch gekennzeichnet**, daß
die Invertiervorrichtung ferner Stromleitungen (15r, 15s, 15t) zum Führen der Ausgangsspannung der Umschaltungs-Schaltung (11) an die Phasenwicklungen (123r, 123s, 123t) des bürstenlosen Gleichstrommotors (120) und ein zwischen der Gleichstromschaltung (5) und der Umschaltungs-Schaltung (11) angeordnetes Rauschentfernungsfilter (7) umfaßt;
wobei das Offset-Mittel mit den Stromleitungen (15r, 15s, 15t) verbundene Spulen (51r, 51s, 51t) und eine LC-Resonanzschaltung (55, 57, 56) umfaßt, und einen von den Phasenwicklungen (123r, 123s, 123t) des bürstenlosen Gleichstrommotors (12) an den Erdungsanschluß (E) über das geschlossene Gehäuse (11) fließenden Common-Mode-Strom (=I1) mittels des Filters (7) erfaßt, den Common-Mode-Strom (=I1) in eine zwischen einem gemeinsamen Punkt (P) der Phasenwicklungen (123r, 123s, 123t) und dem Erdungsanschluß (E) erzeugte Common-Mode-Spannung transformiert und eine umgekehrt gerichtete Spannung an die Stromleitungen (15r, 15s, 15t) über die LC-Resonanzschaltung (55, 57, 56) und die Spulen (51r, 51s, 51t) anlegt, um die erfaßte Common-Mode-Spannung zu versetzen.

7. Vorrichtung gemäß Anspruch 5 und 6, **dadurch gekennzeichnet**, daß
das Offset-Mittel angetrieben wird, um durch die Ausgangsspannung der Gleichstromschaltung (5) wirksam zu sein.

8. Invertiervorrichtung, die geschaltet ist, um Antriebsleistung an einen bürstenlosen Gleichstrommotor (120) auszugeben, der drei Phasenwicklungen (123r, 123s, 123t) aufweist und in einem geschlossenen Gehäuse (111) eines Kompressors (101) untergebracht ist, wobei das geschlossene Gehäuse (111) mit einem Erdungsanschluß (E) verbunden ist, wobei die Invertiervorrichtung umfaßt:
eine Gleichstromschaltung (5) zum Transformieren der Spannung einer Wechselstromversorgung (1) in eine Gleichspannung;
eine Umschaltungs-Schaltung (11) zum Transformieren der Ausgangsspannung der Gleichstromschaltung (5) in eine Hochfrequenzspannung durch Umschaltvorgänge und zum Ausgeben der Hochfrequenzspannung als die Antriebsleistung; und
ein Offset-Mittel zum Versetzen des von den Phasenwicklungen (123r, 123s, 123t) des bürstenlosen Gleichstrommotors (120) über das geschlossene Gehäuse (111) zu dem Erdungsanschluß (E) fließenden Leckstroms,
**dadurch gekennzeichnet**, daß
die Invertiervorrichtung ferner Stromleitungen (15r, 15s, 15t) zum Führen der Ausgangsspannung der Umschaltungs-Schaltung (11) an die Phasenwicklungen (123r, 123s, 123t) des bürstenlosen Gleichstrommotors (120), ein zwischen der Wechselstromversorgung (1) und der Gleichstromschaltung (5) angeordnetes erstes Rauschentfernungsfilter (7) und ein zwischen der Gleichstromschaltung (5) und der Umschaltungs-Schaltung (11) angeordnetes zweites Rauschentfernungsfilter (7) umfaßt; und
das Offset-Mittel mit den Stromleitungen (15r, 15s, 15t) verbundene Spulen (51r, 51s, 51t) und eine LC-Resonanzschaltung (55, 57, 56) umfaßt, und einen Common-Mode-Strom (=I1), der von den Phasenwicklungen (123r, 123s, 123t) des bürstenlosen Gleichstrommotors (12) zu dem Erdungsanschluß (E) über das geschlossene Gehäuse (11) fließt, mittels des Filters (7) erfaßt, den Common-Mode-Strom (=I1) in eine zwischen einem gemeinsamen Punkt (P) der Phasenwicklungen (123r, 123s, 123t) und dem Erdungsanschluß (E) erzeugte Common-Mode-Spannung transformiert, und eine umgekehrt gerichtete Spannung an die Stromleitungen (15r, 15s, 15t) über die LC-Resonanzschaltung (55, 57, 56) und die Spulen (51r, 51s, 51t) anlegt, um die erfaßte Common-Mode-Spannung zu versetzen.

9. Invertiervorrichtung, die geschaltet ist, um Antriebsleistung an einen bürstenlosen Gleichstrommotor (120) auszugeben, der drei Phasenwicklungen (123r, 123s, 123t) aufweist und in einem geschlossenen Gehäuse (111) eines Kompressors (101) untergebracht ist, wobei das geschlossene Gehäuse (111) mit einem Erdungsanschluß (E) verbunden ist, wobei die Invertiervorrichtung umfaßt:
eine Gleichstromschaltung (5) zum Transformieren der Spannung einer Wechselstromversorgung (1) in eine Gleichspannung;
eine Umschaltungs-Schaltung (11) zum Transformieren der Ausgangsspannung der Gleichstromschaltung (5) in eine Hochfrequenzspannung durch Umschaltvorgänge und zum Ausgeben der Hochfrequenzspannung als die Antriebsleistung; und
ein Offset-Mittel zum Versetzen des von den Phasenwicklungen (123r, 123s, 123t) des bürstenlosen Gleichstrommotors (120) über das geschlossene Gehäuse (111) zu dem Erdungsanschluß (E) fließenden Leckstroms,
**dadurch gekennzeichnet**, daß
die Invertiervorrichtung ferner Stromleitungen (15r, 15s, 15t) zum Führen der Ausgangsspannung der Umschaltungs-Schaltung (11) an die Phasenwicklungen (123r, 123s, 123t) des bürstenlosen Gleichstrommotors (120), ein zwischen der Wechselstromversorgung (1) und der Gleichstromschaltung (5) angeordnetes erstes Rauschentfernungsfilter (2) und ein zwischen der Gleichstromschaltung (5) und der Umschaltungs-Schaltung (11) angeordnetes zweites Rauschentfernungsfilter (7) umfaßt; und
das Offset-Mittel mit den Stromleitungen (15r, 15s, 15t) verbundene Spulen (51r, 51s, 51t) und eine LC-Resonanzschaltung (55, 57, 56) umfaßt, und einen Common-Mode-Strom (=I1), der von den Phasenwicklungen (123r, 123s, 123t) des bürstenlosen Gleichstrommotors (12) über das geschlossene Gehäuse (11) zu dem Erdungsanschluß (E) fließt, mittels des zweiten Filters (7) erfaßt, den Common-Mode-Strom (=I1) in eine zwischen einem gemeinsamen Punkt (P) der Phasenwicklungen (123r, 123s, 123t) und dem Erdungsanschluß (E) erzeugte Common-Mode-Spannung transformiert und eine umgekehrt gerichtete Spannung an die Stromleitungen (15r, 15s, 15t) über die LC-Resonanzschaltung (55, 57, 56) und die Spulen (51r, 51s, 51t) anlegt, um die erfaßte Common-Mode-Spannung zu versetzen, während es angesteuert wird, um durch die durch das zweite Filter kommende Spannung wirksam zu sein.

10. Vorrichtung gemäß Ansprüche 1 bis 9, **dadurch gekennzeichnet**, daß
der Kompressor (101) ein Kühlmittel einzieht und es komprimiert und entlädt, wobei das Kühlmittel Hydrofluorkohlenstoff ist.

11. Vorrichtung gemäß Anspruch 1, **dadurch gekennzeichnet**, daß
der Kompressor (101) mit in dem geschlossenen Gehäuse (111) eingefüllten Schmieröl (140) versorgt wird, wobei das Schmieröl (140) entweder vom Ester-Typ oder vom Ether-Typ ist.

12. Vorrichtung gemäß Anspruch 1, **dadurch gekennzeichnet**, daß
der Kompressor (101) mit einem in dem geschlossenen Gehäuse (111) eingefüllten Schmieröl (140) versorgt wird, wobei das Schmieröl (140) eine Mischung von einem Schmieröl mit einer hohen dielektrischen Konstante und einem Schmieröl mit einer niedrigen dielektrischen Konstante ist.

13. Vorrichtung gemäß Anspruch 1, **dadurch gekennzeichnet**, daß
der Kompressor (101) mit in dem geschlossenen Gehäuse (111) eingefüllten Schmieröl (140) versorgt wird, wobei das Schmieröl (140) eine Mischung aus polarem Schmieröl und unpolarem Schmieröl ist.

## Revendications

1. Dispositif d'onduleur relié en vue de fournir en sortie une alimentation d'attaque d'un moteur à courant continu sans balais (120) comportant trois enroulements de phases (123r, 123s, 123t) et logé dans un boîtier fermé (111) d'un compresseur (101), ledit boîtier fermé (111) étant relié à une borne de mise à la terre (E), le dispositif d'onduleur comprenant :
un circuit à courant continu (5) destiné à transformer la tension d'une alimentation à courant alternatif (1) en une tension à courant continu, ledit circuit à courant continu (5) comportant des lignes de sortie (5a, 5b),
un circuit de commutation (11) destiné à transformer la tension de sortie du circuit à courant continu (5) en une tension à haute fréquence grâce à des opérations de commutation et à fournir en sortie la tension à haute fréquence en tant que dite alimentation d'attaque, et
un moyen de compensation destiné à compenser le courant de fuite circulant depuis les enroulements de phases (123r, 123s, 123t) dudit moteur à courant continu sans balais (120) vers la borne de mise à la terre (E) au moyen dudit boîtier fermé (111),
**caractérisé en ce que**
ledit moyen de compensation comprend un détecteur de courant (31) destiné à détecter un courant en mode commun (=I1) circulant depuis lesdits enroulements de phases (123r, 123s, 123t) vers ladite borne de mise à la terre (E) au moyen dudit boîtier fermé (111) et un circuit de compensation de courant (30) destiné à produire un courant électrique (I2) présentant une forme d'onde similaire à celle du courant en mode commun (=I1) détecté par le détecteur de courant (31), ledit circuit de compensation de courant (30) étant relié auxdites lignes de sortie (5a, Sb) et présentant une borne de sortie reliée à ladite borne de mise à la terre (E), dans lequel ledit détecteur de courant (31) détecte ledit courant en mode commun (=I1) depuis lesdites lignes de sortie (Sa, 5b).

2. Dispositif d'onduleur relié en vue de fournir en sortie une alimentation d'attaque à un moteur à courant continu sans balais (120) comportant trois enroulements de phases (123r, 123s, 123t) et logé dans un boîtier fermé (111) d'un compresseur (101), ledit boîtier fermé (111) étant relié à une borne de mise à la terre (E), le dispositif d'onduleur comprenant :
un circuit à courant continu (5) destiné à transformer la tension d'une alimentation à courant alternatif (1) en une tension à courant continu, ledit circuit à courant continu (5) comportant des lignes de sortie (5a, 5b),
un circuit de commutation (11) destiné à transformer la tension de sortie du circuit à courant continu (5) en une tension à haute fréquence grâce à des opérations de commutation et à fournir en sortie la tension à haute fréquence en tant que dite alimentation d'attaque, et
un moyen de compensation destiné à compenser le courant de fuite circulant depuis les enroulements de phases (123r, 123s, 123t) dudit moteur à courant continu sans balais (120) vers la borne de mise à la terre (E), au moyen dudit boîtier fermé (111),
**caractérisé en ce que**
ledit moyen de compensation comprend un détecteur de courant (31) destiné à détecter un courant en mode commun (=I1) circulant depuis lesdits enroulements de phases (123r, 123s, 123t) vers ladite borne de mise à la terre (E) au moyen dudit boîtier fermé (111) et d'un circuit de compensation de courant (30),
le dispositif d'onduleur comprend en outre un filtre d'élimination de bruit (7) agencé sur lesdites lignes de sortie (5a, 5b), ledit filtre (7) comportant des bobinages (9a, 9b) insérés respectivement dans lesdites lignes de sortie (5a, 5b) et un noyau (8) entouré par lesdits bobinages (9a, 9b), dans lequel ledit détecteur de courant (31) détecte ledit courant en mode commun (=I1) au moyen dudit filtre (7),
ledit circuit de compensation de courant (30) comprend un bobinage de détection de courant (36) enroulé autour dudit noyau (8) dudit filtre (7) et un circuit d'amplificateur (39) relié audit bobinage de détection (36) et à l'une desdites lignes de sortie (5b) afin d'amplifier la tension générée dans ledit bobinage de détection de courant (36), détecte ledit courant en mode commun (=I1) au moyen dudit bobinage de détection de courant (36) et produit un courant électrique (I2) présentant une forme d'onde similaire à celle du courant en mode commun (=I1) vers ledit circuit d'amplificateur (39), dans lequel ledit circuit d'amplificateur (39) est un circuit comprenant une paire de transistors (32, 33) destinés à une amplification symétrique en classe A.

3. Dispositif d'onduleur relié en vue de fournir en sortie une alimentation d'attaque à un moteur à courant continu sans balais (120) comportant trois enroulements de phases (123r, 123s, 123t) et logé dans un boîtier fermé (111) d'un compresseur (101), ledit boîtier fermé (111) étant relié à une borne de mise à la terre (E), le dispositif d'onduleur comprenant :
un circuit à courant continu (5) destiné à transformer la tension d'une alimentation à courant alternatif (1) en une tension à courant continu, ledit circuit à courant continu (5) comportant des lignes de sortie (5a, 5b),
un circuit de commutation (11) destiné à transformer la tension de sortie du circuit à courant continu (5) en une tension à haute fréquence grâce à des opérations de commutation et à fournir en sortie la tension à haute fréquence en tant que dite alimentation d'attaque, et
un moyen de compensation destiné à compenser le courant de fuite circulant depuis les enroulements de phases (123r, 123s, 123t) dudit moteur à courant continu sans balais (120) vers la borne de mise à la terre (E) au moyen dudit boîtier fermé (111),
**caractérisé en ce que**
ledit moyen de compensation comprend un détecteur de courant (31) destiné à détecter un courant en mode commun (=I1) circulant depuis lesdits enroulements de phases (123r, 123s, 123t) vers ladite borne de mise à la terre (E) au moyen dudit boîtier fermé (111) et un circuit de compensation de courant (30),
le dispositif d'onduleur comprend en outre un filtre d'élimination de bruit (7) agencé sur lesdites lignes de sortie (Sa, 5b), ledit filtre (7) comprenant des bobinages (9a, 9b) insérés respectivement dans lesdites lignes de sortie (5a, 5b) et un noyau (8) entouré par lesdits bobinages (9a, 9b), dans lequel ledit détecteur de courant (31) détecte ledit courant en mode commun (=I1) au moyen dudit filtre (7),
ledit circuit de compensation de courant (30) comprend une paire de bobinages de détection de courant (36a, 36b) enroulés autour dudit noyau (8) dudit filtre (7) et une paire de circuits d'amplificateurs (39) reliés à ladite paire de bobinages de détection (36a, 36b) et à l'une desdites lignes de sortie (5b) afin d'amplifier la tension générée par les bobinages de détection de courant (36a, 36b) au moyen des transistors respectifs (32, 37), détecte ledit courant en mode commun (=I1) au moyen desdits bobinages de détection de courant (36a, 36b) et produit un courant électrique (I2) présentant une forme d'onde similaire à celle du courant en mode commun (=I1) vers lesdits circuits d'amplificateurs (39).

4. Dispositif selon les revendications 2 et 3, **caractérisé en ce qu**'il comprend en outre :
un circuit de commande d'attaque (23) destiné à attaquer et à commander ledit circuit de commutation (11), et
un circuit intégré (40) comportant ledit circuit de commande d'attaque (23), ledit circuit de commutation (11) et ledit circuit d'amplificateur (39) en tant que parties intégrantes de celui-ci.

5. Dispositif d'onduleur relié en vue de fournir en sortie une alimentation d'attaque à un moteur à courant continu sans balais (120) comportant trois enroulements de phases (123r, 123s, 123t) et logé dans un boîtier fermé (111) d'un compresseur (101), ledit boîtier fermé (111) étant relié à une borne de mise à la terre (E), le dispositif d'onduleur comprenant :
un circuit à courant continu (5) destiné à transformer la tension d'une alimentation à courant alternatif (1) en une tension à courant continu,
un circuit de commutation (11) destiné à transformer la tension de sortie du circuit à courant continu (5) en une tension à haute fréquence grâce à des opérations de commutation et à fournir en sortie la tension à haute fréquence en tant que dite alimentation d'attaque, et
un moyen de compensation destiné à compenser le courant de fuite circulant depuis les enroulements de phases (123r, 123s, 123t) dudit moteur à courant continu sans balais (120) vers la borne de mise à la terre (E) au moyen dudit boîtier fermé (111),
**caractérisé en ce que**
le dispositif d'onduleur comprend en outre des lignes de conduction (15r, 15s, 15t) destinées à conduire la tension de sortie dudit circuit de commutation (11) vers les enroulements de phases (123r, 123s et 123t) dudit moteur à courant continu sans balais (120), et
ledit moyen de compensation comprend des bobinages (51r, 51s, 51t) et des condensateurs (16r, 16s, 16t), reliés auxdites lignes de conduction (15r, 15s, 15t) et un circuit de résonance de type LC (55, 57, 56) et détecte une tension en mode commun générée entre le point commun (P) des enroulements de phases (123r, 123s, 123t) dudit moteur à courant continu sans balais (120) et ladite borne de mise à la terre (E) au moyen desdites lignes de conduction (15r, 15s, 15t) et desdits condensateurs (16r, 16s, 16t) et applique une tension orientée en sens inverse auxdites lignes de conduction (15r, 15s, 16t) par l'intermédiaire dudit circuit de résonance de type LC (55, 57, 56) et desdits bobinages (5 1r, 51s, 51t) afin de compenser la tension en mode commun détectée.

6. Dispositif d'onduleur relié en vue de fournir en sortie une alimentation d'attaque à un moteur à courant continu sans balais (120) comportant trois enroulements de phases (123r, 123s, 123t) et logé dans un boîtier fermé (111) d'un compresseur (101), ledit boîtier fermé (111) étant relié à une borne de mise à la terre (E), le dispositif d'onduleur comprenant :
un circuit à courant continu (5) destiné à transformer la tension d'une alimentation à courant alternatif (1) en une tension à courant continu,
un circuit de commutation (11) destiné à transformer la tension de sortie du circuit à courant continu (5) en une tension à haute fréquence grâce à des opérations de commutation et à fournir en sortie la tension à haute fréquence en tant que dite alimentation d'attaque, et
un moyen de compensation destiné à compenser le courant de fuite circulant depuis les enroulements de phases (123r, 123s, 123t) dudit moteur à courant continu sans balais (120) vers la borne de mise à la terre (E) au moyen dudit boîtier fermé (111),
**caractérisé en ce que**
le dispositif d'onduleur comprend en outre des lignes de conduction (15r, 15s, 15t) destinées à conduire la tension de sortie dudit circuit de commutation (11) vers les enroulements de phases (123r, 123s et 123t) dudit moteur à courant continu sans balais (120), et un filtre d'élimination de bruit (7) agencé entre ledit circuit à courant continu (5) et ledit circuit de commutation (11), et
ledit moyen de compensation comprend des bobinages (51r, 51s, 51t) reliés auxdites lignes de conduction (15r, 15s, 15t) et un circuit de résonance de type LC (55, 57, 56) et détecte un courant en mode commun (=I1) circulant depuis lesdits enroulements de phases (123r, 123s, 123t) dudit moteur à courant continu sans balais (12) vers ladite borne de mise'à la terre (E) par l'intermédiaire dudit boîtier fermé (11) au moyen dudit filtre (7), transforme le courant en mode commun (=I1) en une tension en mode commun produite entre un point commun (P) desdits enroulements de phases (123r, 123s et 123t) et ladite borne de mise à la terre (E) et applique une tension orientée en sens inverse auxdites lignes de conduction (15r, 15s, 15t) par l'intermédiaire dudit circuit de résonance de type LC (55, 57, 56) et desdits bobinages (51r, 51s, 51t) afin de compenser la tension en mode commun détectée.

7. Dispositif selon les revendications 5 et 6, **caractérisé en ce que**
ledit moyen de compensation est piloté pour fonctionner grâce à la tension de sortie dudit circuit à courant continu (5).

8. Dispositif d'onduleur relié en vue de fournir en sortie une alimentation d'attaque à un moteur à courant continu sans balais (120) comportant trois enroulements de phases (123r, 123s, 123t) et logé dans un boîtier fermé (111) d'un compresseur (101), ledit boîtier fermé (111) étant relié à une borne de mise à la terre (E), le dispositif d'onduleur comprenant :
un circuit à courant continu (5) destiné à transformer la tension d'une alimentation à courant alternatif (1) en une tension à courant continu,
un circuit de commutation (11) destiné à transformer la tension de sortie du circuit à courant continu (5) en une tension à haute fréquence grâce à des opérations de commutation et à fournir en sortie la tension à haute fréquence en tant que dite alimentation d'attaque, et
un moyen de compensation destiné à compenser le courant de fuite circulant depuis les enroulements de phases (123r, 123s, 123t) dudit moteur à courant continu sans balais (120) vers la borne de mise à la terre (E) au moyen dudit boîtier fermé (111),
**caractérisé en ce que**
le dispositif d'onduleur comprend en outre des lignes de conduction (15r, 15s, 15t) destinées à conduire la tension de sortie dudit circuit de commutation (11) vers les enroulements de phases (123r, 123s, 123t) dudit moteur à courant continu sans balais (120), un premier filtre d'élimination de bruit (2) agencé entre ladite alimentation à courant alternatif (1) et ledit circuit à courant continu (5), et un second filtre d'élimination de bruit (7) agencé entre ledit circuit à courant continu (5) et ledit circuit de commutation (11), et
ledit moyen de compensation comprend des bobinages (51r, 51s, 51t) reliés auxdites lignes de conduction (15r, 15s, 15t) et un circuit de résonance de type LC (55, 57, 56) et détecte un courant en mode commun (=I1) circulant depuis lesdits enroulements de phases (123r, 123s, 123t) dudit moteur à courant continu sans balais (12) vers ladite borne de mise à 1a terre (E) par l'intermédiaire dudit boîtier fermé (11) au moyen dudit second filtre (7), transforme le courant en mode commun (= I1) en une tension en mode commun produite entre un point commun (P) desdits enroulements de phases (123r, 123s et 123t) et ladite borne de mise à la terre (E) et applique une tension orientée en sens inverse auxdites lignes de conduction (15r, 15s, 15t) par l'intermédiaire dudit circuit de résonance de type LC (55, 57, 56) et desdits bobinages (51r, 51s, 51t) afin de compenser la tension en mode commun détectée.

9. Dispositif d'onduleur relié en vue de fournir en sortie une alimentation d'attaque à un moteur à courant continu sans balais (120) comportant trois enroulements de phases (123r, 123s, 123t) et logé dans un boîtier fermé (111) d'un compresseur (101), ledit boîtier fermé (111) étant relié à une borne de mise à la terre (E), le dispositif d'onduleur comprenant :
un circuit à courant continu (5) destiné à transformer la tension d'une alimentation à courant alternatif (1) en une tension à courant continu,
un circuit de commutation (11) destiné à transformer la tension de sortie du circuit à courant continu (5) en une tension à haute fréquence grâce à des opérations de commutation et à fournir en sortie la tension à haute fréquence en tant que dite alimentation d'attaque, et
un moyen de compensation destiné à compenser le courant de fuite circulant depuis les enroulements de phases (123r, 123s, 123t) dudit moteur à courant continu sans balais (120) vers la borne de mise à la terre (E) au moyen dudit boîtier fermé (111),
**caractérisé en ce que**
le dispositif d'onduleur comprend en outre des lignes de conduction (15r, 15s, 15t) destinées à conduire la tension de sortie dudit circuit de commutation (11) vers les enroulements de phases (123r, 123s, 123t) dudit moteur à courant continu sans balais (120), un premier filtre d'élimination de bruit (2) agencé entre ladite alimentation à courant alternatif (1) et ledit circuit à courant continu (5), et un second filtre d'élimination de bruit (7) agencé entre ledit circuit à courant continu (5) et ledit circuit de commutation (11), et
ledit moyen de compensation comprend des bobinages (51r, 51s, 51t) reliés auxdites lignes de conduction (15r, 15s, 15t) et un circuit de résonance de type LC (55, 57, 56) et détecte un courant en mode commun (=I1) circulant depuis lesdits enroulements de phases (123r, 123s, 123t) dudit moteur à courant continu sans balais (12) vers ladite borne de mise à la terre (E) par l'intermédiaire dudit boîtier fermé (11) au moyen dudit second filtre (7), transforme le courant en mode commun (=I1) en une tension en mode commun produite entre un point commun (P) desdits enroulements de phases (123r, 123s et 123t) et ladite borne de mise à la terre (E) et applique une tension orientée en sens inverse auxdites lignes de conduction (15r, 15s, 15t) par l'intermédiaire dudit circuit de résonance de type LC (55, 57, 56) et desdits bobinages (51r, 51s, 51t) afin de compenser la tension en mode commun détectée, alors qu'il est piloté de façon à fonctionner grâce à la tension provenant dudit second filtre.

10. Dispositif selon l'une des revendications 1 à 9, **caractérisé en ce que**
ledit compresseur (101) aspire du réfrigérant et le comprime et le refoule, ledit réfrigérant étant de l'hydrofluorocarbure.

11. Dispositif selon la revendication 1, **caractérisé en ce que**
ledit compresseur (101) reçoit de l'huile de lubrification (140) versée dans ledit boîtier fermé (111), ladite huile de lubrification (140) étant soit du type ester, soit du type éther.

12. Dispositif selon la revendication 1, **caractérisé en ce que**
ledit compresseur (101) reçoit de l'huile de lubrification (140) versée dans ledit boîtier fermé (111), ladite huile de lubrification (140) étant un mélange d'huile de lubrification présentant une constante diélectrique élevée et une huile de lubrification présentant une faible constante diélectrique.

13. Dispositif selon la revendication 1, **caractérisé en ce que**
ledit compresseur (101) reçoit de l'huile de lubrification (140) versée dans ledit boîtier fermé (111), ladite huile de lubrification (140) étant un mélange d'huile de lubrification présentant une polarité et d'huile de lubrification ne présentant pas de polarité.
